(19) Europäisches Patentamt
European Patent Office
Office européen des brevets

(11) **EP 3 159 444 B1**

(12) **EUROPEAN PATENT SPECIFICATION**

(45) Date of publication and mention
of the grant of the patent:
**29.07.2020   Bulletin 2020/31**

(51) Int Cl.:
*D04H 1/4334* *(2012.01)*     *A47L 13/16* *(2006.01)*
*B01J 20/26* *(2006.01)*     *B32B 5/26* *(2006.01)*
*D04H 1/46* *(2012.01)*     *D04H 1/492* *(2012.01)*
*D04H 1/542* *(2012.01)*     *D04H 3/16* *(2006.01)*
*B32B 5/08* *(2006.01)*     *B32B 7/04* *(2019.01)*
*B32B 7/08* *(2019.01)*

(21) Application number: **15809783.2**

(22) Date of filing: **16.06.2015**

(86) International application number:
**PCT/JP2015/067342**

(87) International publication number:
**WO 2015/194563 (23.12.2015 Gazette 2015/51)**

(54) **WATER ABSORBENT LAMINATE AND METHOD FOR PRODUCING SAME**

WASSERABSORBIERENDES LAMINAT UND VERFAHREN ZUR HERSTELLUNG DAVON

STRATIFIÉ ABSORBANT L'EAU ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2014   JP 2014124491**

(43) Date of publication of application:
**26.04.2017   Bulletin 2017/17**

(73) Proprietor: **Kuraray Co., Ltd.**
**Kurashiki-shi, Okayama 710-0801 (JP)**

(72) Inventors:
• **NAKAYAMA, Kazuhisa**
**Okayama-shi**
**Okayama 702-8045 (JP)**
• **KIYOOKA, Sumito**
**Okayama-shi**
**Okayama 702-8045 (JP)**
• **ARAIDA, Yasurou**
**Osaka-shi**
**Osaka 530-8611 (JP)**

(74) Representative: **Vossius & Partner**
**Patentanwälte Rechtsanwälte mbB**
**Siebertstrasse 3**
**81675 München (DE)**

(56) References cited:
**WO-A1-2013/147051     JP-A- S63 196 753**
**JP-A- 2006 299 425     JP-A- 2009 084 714**
**JP-A- 2009 233 645     JP-A- 2012 040 730**
**JP-A- 2014 036 929**

• **DATABASE WPI Week 200971 Thomson
Scientific, London, GB; AN 2009-Q03997
XP002777035, & JP 2009 233645 A (KURARAY CO
LTD) 15 October 2009 (2009-10-15)**
• **DATABASE WPI Week 200930 Thomson
Scientific, London, GB; AN 2009-H70690
XP002777036, & JP 2009 084714 A (KURARAY CO
LTD) 23 April 2009 (2009-04-23)**
• **DATABASE WPI Week 201218 Thomson
Scientific, London, GB; AN 2012-C77862
XP002777037, & JP 2012 040730 A (KURARAY
KURAFLEX CO LTD) 1 March 2012 (2012-03-01)**

**Description**

TECHNICAL FIELD

The present invention relates to a water absorbent laminate that can be suitably used as a water absorbent material represented by a wiping material etc. for wiping off water, and a method for producing the water absorbent laminate.

BACKGROUND ART

Water absorbent materials that are disposed at a predetermined position to soak up and remove water existing or generated at the position, water absorbent materials for absorbing and removing water by wiping etc., and water absorbent materials for retaining absorbed water are commonly used not only in general consumer and general household applications but also in industrial applications. From the viewpoint of water absorbency etc., nonwoven fabrics composed of hydrophilic fibers, etc. are used in many water absorbent materials.

For example, Japanese Patent Laying-Open No. 11-291377 (PTD 1) describes that a composite nonwoven fabric, that is obtained by laminating a thermally fusible fiber nonwoven fabric on a paper-made nonwoven fabric formed by mixing thermally fusible short fibers with hydrophilic short fibers by thermocompression bonding in embossment, is used in, for example, an absorbent article such as a disposable diaper. Japanese Patent Laying-Open No. 2004-313425 (PTD 2) describes that a nonwoven fabric formed by interlacing ultrafine fibers with water absorbent fibers is used in a wiping sheet for wiping off water. Japanese Patent Application No. 2009-233645 (PTD 3) discloses a water-absorbent laminate comprising hydrophilic fibers and wet-heat-adhesive fibers.

CITATION LIST

PATENT DOCUMENT

PTD 1: Japanese Patent Laying-Open No. 11-291377
PTD 2: Japanese Patent Laying-Open No. 2004-313425
PTD 3: Japanese Patent Application No. 2009-233645

SUMMARY OF INVENTION

TECHNICAL PROBLEMS

An object of the present invention is to provide a novel high-strength water absorbent material having high strength and excellent water absorbency and water retainability.

SOLUTIONS TO PROBLEMS

The present invention provides a water absorbent laminate, a use of the water absorbent laminate and a method for producing the water absorbent laminate as defined in the appended claims.

ADVANTAGEOUS EFFECTS OF INVENTION

According to the present invention, there can be provided a water absorbent laminate having excellent water absorbency and water retainability. The water absorbent laminate according to the present invention can be suitably used as a water absorbent material represented by a wiping material for wiping off water or deposits containing water from surfaces of various kinds of objects.

BRIEF DESCRIPTION OF DRAWINGS

Fig. 1 is a sectional view schematically showing one example of a water absorbent laminate according to the present invention.

Fig. 2 is a sectional view schematically showing another example of a water absorbent laminate according to the present invention.

Fig. 3 is a sectional view schematically showing still another example of a water absorbent laminate according to the present invention.

DESCRIPTION OF EMBODIMENTS

The present invention relates to a water absorbent laminate that includes at least a first fiber layer including a first fiber assembly including first hydrophilic fibers; and a second fiber layer including a second fiber assembly including wet-heat-adhesive fibers in an amount greater than or equal to 80% by mass. Hereinafter, the present invention will be described in detail with reference to embodiments.

<Embodiment 1>

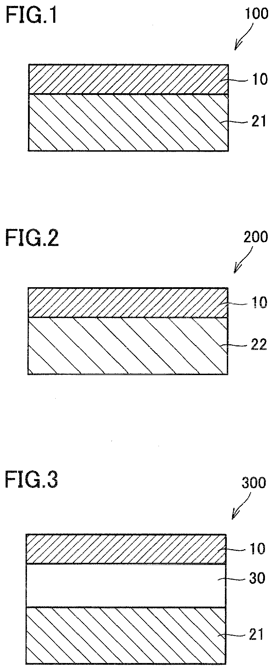

Fig. 1 is a sectional view schematically showing one example of a water absorbent laminate according to this embodiment. A water absorbent laminate 100 shown in Fig. 1 includes a first fiber layer 10, and a second fiber layer 21 stacked adjacently on one side of first fiber layer 10 in the thickness direction (i.e., second fiber layer 21 is stacked on first fiber layer 10 so as to be in contact with one surface of first fiber layer 10)

(1) First Fiber Layer

First fiber layer 10 is a layer that is involved in at least absorption of water in water absorbent laminate 100. A surface of first fiber layer 10 on a side opposite to second fiber layer 21 (i.e., the other surface of first fiber layer 10 in the thickness direction) can be a water absorption surface absorbing water therefrom, and can be a wiping surface that is brought into contact with surfaces of various kinds of objects in the case where water absorbent laminate 100 is, for example, a wiping material for wiping off water or deposits containing water along with other components from the surfaces of the objects.

First fiber layer 10 is a layer made of a first fiber assembly. The first fiber assembly has water absorbency, and preferably allows water to permeate to second fiber layer 21. From the viewpoint of water absorbency and water permeability, the first fiber assembly forming first fiber layer 10 includes hydrophilic fibers (first hydrophilic fibers). The hydrophilic fibers can be synthetic fibers, natural fibers, regenerated fibers or the like. The hydrophilic fibers may be used singly, or in combination of two or more kinds thereof.

Examples of the hydrophilic synthetic fiber may include synthetic fibers made from a thermoplastic resin having hydrophilic groups such as a hydroxyl group, a carboxyl group and a sulfone group, and/or hydrophilic bonds such as an amide bond. Specific examples of the thermoplastic resin include polyvinyl alcohol-based resins (e.g., ethylene-vinyl alcohol-based copolymers); polyamide-based resins [e.g., aliphatic polyamides such as polyamide 6, polyamide 66, polyamide 11, polyamide 12, polyamide 610, polyamide 612, polyamide 92 and polyamide 9C (a polyamide composed of nonanediamine and cyclohexanedicarboxylic acid), and copolymers thereof and semi-aromatic polyamides synthesized from an aromatic dicarboxylic acid and an aliphatic diamine, such as polyamide 9T (a polyamide composed of nonanediamine and terephthalic acid), and copolymers thereof]; polyester-based resins (e.g., polylactic acid-based resins such as polylactic acid); and (meth)acrylic resins [e.g., resins including (meth)acrylamide units]. Among them, polyvinyl alcohol-based resins and polyamide-based resins are preferably used The hydrophilic synthetic fibers may be used singly, or in combination of two or more kinds thereof. In the case where the first fiber structure is composed of fibers of a non-hydrophilic resin (hydrophobic resin) such as, for example, a polyolefin-based resin or a polyester-based resin, a laminate having good water absorbency cannot be obtained.

In an ethylene-vinyl alcohol-based copolymer as one preferred example of the polyvinyl alcohol-based resin, the content of the ethylene unit (copolymerization ratio) is, for example, 10 to 60 mol%, preferably 20 to 55 mol%, more preferably 30 to 50 mol%. The saponification degree of the vinyl alcohol unit is, for example, 90 to 99.99 mol%, preferably 95 to 99.98 mol%, more preferably 96 to 99.97 mol%. The viscosity average polymerization degree of the ethylene-vinyl alcohol-based copolymer is, for example, 200 to 2500, preferably 300 to 2000, more preferably 400 to 1500.

Examples of the hydrophilic natural fiber include cotton, silk, hemp, silk and wool. Examples of the hydrophilic regenerated fiber include cellulose-based fibers such as rayon, lyocell, cupro and polynosic. These natural fibers and regenerated fibers may be used singly, or in combination of two or more kinds thereof.

The hydrophilic fiber is made from a hydrophilic resin at least at the surface thereof, and may be, for example, a fiber obtained by hydrophilizing the surface of a hydrophobic resin, or a core-sheath-type composite fiber having a structure in which a hydrophilic resin covers the whole surface of a core part continuously in the length direction. The core part of the core-sheath-type composite fiber can be made from a thermoplastic resin such as, for example, a polyolefin-based resin such as polyethylene or polypropylene, a polyester-based resin, a polyamide-based resin or a polyurethane-based resin. Examples of the hydrophilic resin forming the sheath part include those described for the hydrophilic synthetic fibers. The content ratio of the sheath part to the core part (sheath part/core part) in the core-sheath-type composite fiber is, for example, 90/10 to 10/90, preferably 80/20 to 15/85, more preferably 60/40 to 20/80 in mass ratio.

The first fiber assembly forming first fiber layer 10 may include fibers other than hydrophilic fibers (e.g., hydrophobic fibers), but the content of hydrophilic fibers is preferably high from the viewpoint of water absorbency. Specifically, the content of hydrophilic fibers included in the first fiber assembly is preferably greater than or equal to 70% by mass, more preferably greater than or equal to 80% by mass, still more preferably greater than or equal to 90% by mass (e.g., 100% by mass). Examples of the fiber other than hydrophilic fibers may include fibers made from a polyolefin-based resin such as polyethylene or polypropylene, a polyester-based resin or a polyurethane-based resin.

Water absorbent laminate 100 has good water absorbency, and a surface of first fiber layer 10 on a side opposite to second fiber layer 21 (the other surface of first fiber layer 10 in the thickness direction), which serves as a water absorption surface, has a water absorption rate less than or equal to 10 seconds, preferably less than or equal to 5 seconds as determined in accordance with the dropping method defined in Section 7.1.1 in "Water Absorbency Test Method for Fiber Products" in JIS L 1907. The water absorption rate is usually greater than or equal to 0.01 second. The water absorption rate mentioned herein means a water absorption rate at the outer surface of water absorbent laminate 100.

Preferably, hydrophilic fibers forming the first fiber assembly (and fibers other than hydrophilic fibers if the first fiber assembly includes these fibers) have an extremely small fiber diameter smaller than that of fibers forming other layers of water absorbent laminate 100 in order to improve the surface smoothness of the outer surface of first fiber layer 10, which serves as a water absorption surface. Specifically, the average fiber diameter (number average fiber diameter) is less than or equal to 10 $\mu$m, more preferably 0.1 to 9 $\mu$m, still more preferably 0.5 to 8 $\mu$m, still more preferably 1 to 7 $\mu$m, especially preferably 2 to 6 $\mu$m. When the average fiber diameter is in the range as described above, the outer surface of first fiber layer 10 has excellent surface smoothness, and damage to a surface of an object to be wiped can be effectively suppressed when water absorbent laminate 100 is used as, for example, a wiping material. High surface smoothness is also advantageous in terms of water absorbency and uniformity of wiping operations because the contact surface with a surface of an object on which water to be absorbed and removed is deposited is widened. In the case where the average fiber diameter is excessively small, permeability of absorbed water into second fiber layer 21 may be reduced. Usually, the cross-sectional shape of fibers forming the first fiber assembly can be a perfectly circular shape, an elliptical shape or the like, When the first fiber assembly includes fibers other than hydrophilic fibers, the average fiber diameter of the other fibers is preferably in the range as described above.

Fibers forming the first fiber assembly may contain one or more additives as necessary. Specific examples of the additive include colorants, heat stabilizers, ultraviolet absorbers, light stabilizers, antioxidants, fine particles, crystallization rate retarders, antistatic agents, flame retardants, plasticizers and lubricants. The additive may be carried on the surfaces of fibers, or contained in fibers.

The first fiber assembly forming first fiber layer 10 is preferably a nonwoven fiber assembly, more preferably a melt-blown nonwoven fiber assembly. By a melt-blow method, first fiber layer 10 composed of ultrafine fibers can be easily formed, and first fiber layer 10 having a structure and characteristics that are advantageous in terms of improvement of water absorption performance of water absorbent laminate 100 can be easily formed.

The average pore size of first fiber layer 10 in water absorbent laminate 100 is preferably 0.5 to 50 $\mu$m, more preferably 5 to 40 $\mu$m. When the average pore size is in the range as described above, good water absorbency can be imparted to first fiber layer 10. It is also advantageous in terms of improvement of particle trapping performance that the average pore size is in the range as described above. As described later, water absorbent laminate 100 can also be suitably used as, for example, a wiping material (cleaning tape) for wiping off an abrasive grain slurry (water with abrasive grains dispersed therein) deposited on a board of a substrate such as a hard disk board after a step of polishing the board. When the average pore size is in the range as described above, abrasive grains can be effectively trapped and held. Preferably, the average pore size of first fiber layer 10 is adjusted to a value slightly larger than the abrasive gram size. Water absorbent laminate 100 can trap not only abrasive grains but also other particles (solid substance), and the average pore size of first fiber layer 10 in such a case can be adjusted according to the particle size of particles (solid substance) to be trapped and removed, to such an extent that good water absorbency is obtained.

The porosity of first fiber layer 10 in water absorbent laminate 100 is preferably greater than or equal to 70%, more preferably greater than or equal to 75%, still more preferably greater than or equal to 80% from the viewpoint of the water absorption rate and permeability of absorbed water into second fiber layer 21. The porosity of first fiber layer 10 is usually less than or equal to 99%, more typically less than or equal to 95%.

First fiber layer 10 is preferably a dense layer made of an ultrafine first fiber assembly as described above, and the basis weight of the layer is, for example, 3 to 100 g/m$^2$, preferably 5 to 90 g/m$^2$, more preferably 10 to 80 g/m$^2$ (e.g., 30 to 70 g/m$^2$). When the basis weight of first fiber layer 10 is excessively small, fibers forming second fiber layer 21 in water absorbent laminate 100 are easily exposed to the outer surface of first fiber layer 10, so that the surface smoothness of the outer surface may be impaired. When the basis weight of first fiber layer 10 is excessively large, permeability of absorbed water into second fiber layer 21 is easily reduced.

The apparent density of first fiber layer 10 in water absorbent laminate 100 is preferably less than or equal to 0.35 g/cm$^3$, more preferably less than or equal to 0.3 g/cm$^3$, still more preferably less than or equal to 0.25 g/cm$^3$ (e.g., less than or equal to 0.2 g/cm$^3$) When the apparent density of first fiber layer 10 is excessively large, permeability of absorbed water into second fiber layer 21 is easily reduced. The apparent density of first fiber layer 10 is usually greater than or equal to 0.01 g/cm$^3$, more typically greater than or equal to 0.1 g/cm$^3$.

The thickness of first fiber layer 10 in water absorbent laminate 100 is, for example, 10 to 600 $\mu$m, and preferably greater than or equal to 50 $\mu$m, more preferably greater than or equal to 100 $\mu$m from the viewpoint of water absorbency. When the thickness of first fiber layer 10 is excessively small, good water absorbency is hardly obtained. The thickness of first fiber layer 10 is preferably less than or equal to 550 $\mu$m, more preferably less than or equal to 500 $\mu$m from the viewpoint of permeability of absorbed water into second fiber layer 21 .

While the method for producing first fiber layer 10 (first fiber assembly) is not particularly limited as long as the predetermined first fiber assembly can be formed, it is preferable to use a melt-blow method because, as described above, first fiber layer 10 composed of ultrafine fibers can be easily formed, and first fiber layer 10 having a structure and characteristics that are advantageous in terms of improvement of water absorption performance of water absorbent laminate 100 can be easily formed.

In the melt-blow method, for example, a heat-melted thermoplastic resin is extruded (spun) from spinning holes of a nozzle having orifices (spinning holes) arranged in a line, high-temperature air heated to a temperature equivalent to that of the nozzle is jetted from a slit provided in the vicinity of the spinning holes, the high-temperature air is brought into contact with the molten resin spun from the spinning holes, so that the molten resin is minutely divided, and fibers formed by minutely dividing the resin are collected on a collection surface of a conveyor disposed below the nozzle, whereby a nonwoven fabric can be obtained.

The interval between spinning holes in the melt-blow method is, for example, 100 to 4000 holes/m, preferably 500 to 3000 holes/m, more preferably 1000 to 2500 holes/m. The single hole discharge amount is, for example, 0.01 to 1 g/hole•minute, preferably 0.05 to 0.5 g/hole•minute, more preferably 0. 1 to 0.3 g/hole•minute. The spinning temperature can be selected according to the kind of the thermoplastic resin, and it is, for example, 150 to 300°C, preferably 200 to 280°C, more preferably 220 to 270°C.

The air pressure of the high-temperature air is, for example, 0.01 to 1 MPa, preferably 0.05 to 0.8 MPa, more preferably 0.1 to 0.6 MPa, still more preferably 0.2 to 0.5 MPa. The air temperature is, for example, a temperature close to the spinning temperature, preferably a temperature higher by 0 to 50°C than the spinning temperature, more preferably a temperature higher by 3 to 30°C than the spinning temperature, still more preferably a temperature higher by 5 to 20°C than the spinning temperature.

The conveyor speed is, for example, 1 to 200 m/minute, preferably 5 to 100 m/minute, more preferably 10 to 80 m/minute. By adjusting the air pressure, the conveyor speed, the distance (collection distance) between the spinning holes and the conveyor (e.g., net conveyor), and so on, the average pore size, the porosity, the basis weight, the apparent density, the thickness and so on of resulting first fiber layer 10 can be controlled.

(2) Second Fiber Layer

Second fiber layer 21 is a fiber layer made of a second fiber assembly including wet-heat-adhesive fibers in an amount greater than or equal to 80% by mass, and the second fiber assembly is preferably a nonwoven fiber assembly. The nonwoven fiber assembly (second fiber layer 21) can be obtained by applying high-temperature (overheated or heated) steam to a web including wet-heat-adhesive fibers, so that a bonding action is exhibited at a temperature less than or equal to the melting point of the wet-heat-adhesive fibers to partially bond/fix and bundle the fibers.

By stacking second fiber layer 21 on one side of first fiber layer 10 in the thickness direction, excellent water retainability and strength can be imparted to water absorbent laminate 100, and the water absorbency of water absorbent laminate 100 can be improved. In the case where water absorbent laminate 100 is used as a wiping material, it is required to perform wiping operations uniformly for a surface of an object to be wiped while water absorbent laminate 100 does not cause necking during wiping operations. By stacking second fiber layer 21, the necking resistance of water absorbent laminate 100 can be improved. In the case where water absorbent laminate 100 is used as a wiping material, it is required to suppress damage to a surface of an object to be wiped. By stacking second fiber layer 21, the cushioning property (compressive elastic modulus) of water absorbent laminate 100 can be improved, so that damage to a surface can be effectively suppressed.

In this embodiment, the wet-heat-adhesive fibers forming the second fiber assembly are made from at least a wet-heat-adhesive resin. The wet-heat-adhesive resin is a resin that can be fluidized or easily deformed to exhibit a bonding function at a temperature easily achievable by high-temperature steam. More specifically, the wet-heat-adhesive resin may be a thermoplastic resin that can be softened by hot water (e.g., at 80 to 120°C, particularly at about 95 to 100°C), and self-bonded or bonded to other fibers. Specific examples of the wet-heat-adhesive resin include cellulose-based resins (e.g., $C_{1-3}$ alkyl cellulose ethers such as methyl cellulose ether, hydroxy-$C_{1-3}$ alkyl cellulose ethers such as hydroxymethyl cellulose ether, carboxy-$C_{1-3}$ alkyl cellulose ethers such as carboxymethyl cellulose ether, or salts thereof); polyalkylene glycol-based resins (e.g., poly-$C_{2-4}$ alkylene oxides such as polyethylene oxide and polypropylene oxide); polyvinyl-based resins (e.g., polyvinyl pyrrolidone, polyvinyl ether, vinyl alcohol-based polymers and polyvinyl acetal); (meth)acrylic resins and alkali metal salts thereof [e.g., copolymers including units composed of an acrylic monomer such as (meth)acrylic acid or (meth)acrylamide, or salts thereof]; modified vinyl-based copolymers (e.g., copolymers of a vinyl-based monomer such as isobutylene, styrene, ethylene or vinyl ether and an unsaturated carboxylic acid or an anhydride thereof such as maleic anhydride, or salts thereof); polymers containing hydrophilic substituents (e.g., polyesters, polyamides or polystyrenes containing sulfonic acid groups, carboxyl groups or hydroxyl groups or the like, or salts thereof); and aliphatic polyester-based resins (e.g., polylactic acid-based resins). Examples of the wet-heat-adhesive resin also include resins that can be softened by hot water (high-temperature steam) to exhibit a bonding function, among polyolefin-based resins, polyester-based resins, polyamide-based resins, polyurethane-based resins, thermoplastic elastomers or rubbers (styrene-based elastomers etc,), and so on. The wet-heat-adhesive resins may be used singly, or in combination of two or more kinds thereof.

The wet-heat-adhesive resin is preferably a vinyl alcohol-based polymer, a polylactic acid-based resin such as polylactic acid, or a (meth)acrylic resin including a (meth)acrylamide unit, more preferably a vinyl alcohol-based polymer including an $\alpha$-$C_{2-10}$ olefin unit such as ethylene or propylene, still more preferably an ethylene-vinyl alcohol-based copolymer.

In the ethylene-vinyl alcohol-based copolymer, the content of ethylene units (copolymerization ratio) is, for example, 10 to 60 mol%, preferably 20 to 55 mol%, more preferably 30 to 50 mol%. When the content of the ethylene unit is in the range as described above, a unique property of having wet-heat-adhesiveness but having no hot water-solubility can be imparted. When the ratio of the ethylene unit is excessively low, the ethylene-vinyl alcohol-based copolymer easily swells of gelates under low-temperature steam (water), and is easily changed in morphology when wetted with water only once. When the ratio of the ethylene unit is excessively high, moisture absorbency is reduced, so that fiber fusion is hardly performed by wet-heat, and therefore it is difficult to secure practical strength in the resulting nonwoven fiber assembly. Particularly when the ratio of the ethylene unit is in the range of 30 to 50 mol%, excellent processability into a nonwoven fiber assembly is obtained.

The saponification degree of the vinyl alcohol unit in the ethylene-vinyl alcohol-based copolymer is, for example, 90 to 99.99 mol%, preferably 95 to 99.98 mol%, more preferably 96 to 99.97 mol%. When the saponification degree is excessively small, heat stability is deteriorated, so that heat decomposition and gelation tend to easily occur. When the saponification degree is excessively large, it is difficult to produce fibers themselves.

The viscosity average polymerization degree of the ethylene-vinyl alcohol-based copolymer is, for example, 200 to 2500, preferably 300 to 2000, more preferably 400 to 1500. When the polymerization degree is in the range as described above, an excellent balance between spinnability and wet-heat-adhesiveness is obtained.

The transverse cross-sectional shape of the wet-heat-adhesive fiber (cross-sectional shape perpendicular to the length direction of the fiber) is not limited to a general solid cross-sectional shape such as a perfectly circular shape or an irregular shape [flat shape, elliptical shape, polygonal shape, 3 to 14-foliated shape, T-shape, H-shape, V-shape, dog-bone (I-shape) or the like], and it may be, for example, a hollow cross-sectional shape.

The wet-heat-adhesive fiber may be a composite fiber made from a plurality of resins including at least a wet-heat-adhesive resin. The composite fiber needs to have a wet-heat-adhesive resin on at least a part of the surface of the fiber. However, from the viewpoint of adhesiveness between fibers, it is preferable that the wet-heat-adhesive resin occupies at least a part of the surface continuously in the length direction.

The transverse cross-sectional structure of the composite fiber, the surface of which is occupied by the wet-heat-adhesive fiber, can have a structure of core-sheath type, sea-island type, side-by-side type, multilayer lamination type, radial lamination type, random composite type or the like. Particularly, the core-sheath-type structure being a structure in which the wet-heat-adhesive resin occupies the whole surface of the core part continuously in the length direction (i.e., a core-sheath-type structure in which the sheath part is made from a wet-heat-adhesive resin) is preferable because the structure has high adhesiveness between fibers.

In the composite fiber, wet-heat-adhesive resins may be combined, or a non-wet-heat-adhesive resin may be combined with a wet-heat-adhesive resin. One preferred example of the latter is a core-sheath-type composite fiber including a core part made from a non-wet-heat-adhesive resin and a sheath part made from a wet-heat-adhesive resin. Examples of the non-wet-heat-adhesive resin include polyolefin-based resins, (meth)acrylic resins, vinyl chloride-based resins, styrene-based resins, polyester-based resins, polyamide-based resins, polycarbonate-based resins, polyurethane-based resins and thermoplastic elastomers. The non-wet-heat-adhesive resins may be used singly, or in combination of two or more kinds thereof.

Particularly, as the non-wet-heat-adhesive resin, use of a resin having a melting point higher than that of a wet-heat-adhesive resin (particularly an ethylene-vinyl alcohol-based copolymer), for example, a polypropylene-based resin, a polyester-based resin or a polyamide-based resin, is preferable from the viewpoint of the heat resistance and dimensional stability of composite fibers, and use of a polyester-based resin or a polyamide-based resin is more preferable because such a resin is excellent in balance among heat resistance, fiber formability and so on.

Examples of the polyester-based resin may include aromatic polyester-based resins such as polyethylene terephthalate-based resins, polytrimethylene terephthalate-based resins, polybutylene terephthalate-based resins and polyethylene naphthalate-based resins, and polyethylene terephthalate-based resins are preferable. The polyethylene terephthalate-based resin may include, in addition to an ethylene terephthalate unit, units derived from other dicarboxylic acids (e.g., isophthalic acid, naphthalene-2,6-dicarboxylic acid, phthalic acid, 4,4'-diphenylcarboxylic acid, bis(carboxyphenyl)ethane and 5-sodium sulfoisophthalic acid) and diols (e.g., diethylene glycol, 1,3-propanediol, 1,4-butandiol, 1,6-hexanediol, neopentyl glycol, cyclohexane-1,4-dimethanol, polyethylene glycol and polytetramethylene glycol) in a ratio less than or equal to about 20 mol%.

Examples of the polyamide-based resin may include aliphatic polyamides such as polyamide 6, polyamide 66, polyamide 11, polyamide 12, polyamide 610, polyamide 612, polyamide 92 and polyamide 9C (a polyamide composed of nonanediamine and cyclohexanedicarboxylic acid), and copolymers thereof, and semi-aromatic polyamides synthesized from an aromatic dicarboxylic acid and an aliphatic diamine, such as polyamide 9T (a polyamide composed of nonanediamine and terephthalic acid), and copolymers thereof. The polyamide-based resin may include units derived from other copolymerizable monomers.

In the composite fiber made from a wet-heat-adhesive resin and a non-wet-heat-adhesive resin (fiber forming copolymer), the ratio (mass ratio) between both the resins can be selected according to the structure (e.g., core-sheath-type structure). For example, the ratio (wet-heat-adhesive resin/non-wet-heat-adhesive resin) is 90/10 to 10/90, preferably 80/20 to 15/85, more preferably 60/40 to 20/80. When the ratio of the wet-heat-adhesive resin is excessively high, the strength of fibers is hardly secured, and when the ratio of the wet-heat-adhesive resin is excessively low, it is difficult to ensure that the wet-heat-adhesive resin exists continuously in the length direction of the fiber surface, leading to deterioration of wet-heat-adhesiveness. There is the same tendency as described above even when the surfaces of non-wet-heat-adhesive fibers are coated with a wet-heat-adhesive resin.

The average fineness of wet-heat-adhesive fibers can be selected from the range of, for example, 0.01 to 100 dtex, and is preferably 0.1 to 50 dtex, more preferably 0.5 to 30 dtex (particularly 1 to 10 dtex). When the average fineness is in the range as described above, an excellent balance between fiber strength and exhibition of wet-heat-adhesiveness is obtained.

The average fiber length of wet-heat-adhesive fibers can be selected from the range of, for example, 10 to 100 mm, and is preferably 20 to 80 mm, more preferably 25 to 75 mm (particularly 35 to 55 mm). When the average fiber length is in the range as described above, fibers are sufficiently interlaced, and therefore the mechanical strength of the second fiber assembly (second fiber layer 21) is improved.

The crimp ratio of wet-heat-adhesive fibers is, for example, 1 to 50%, preferably 3 to 40%, more preferably 5 to 30% (particularly 10 to 20%). The number of crimps is, for example, 1 to 100/inch, preferably 5 to 50/inch, more preferably about 10 to 30/inch.

The second fiber assembly forming second fiber layer 21 may include non-wet-heat-adhesive fibers in addition to wet-heat-adhesive fibers. Specific examples of the non-wet-heat-adhesive fibers include polyester-based fibers (e.g., aromatic polyester fibers such as polyethylene terephthalate fibers, polytrimethylene terephthalate fibers, polybutylene terephthalate fibers and polyethylene naphthalate fibers); polyamide-based fibers (e.g., aliphatic polyamide-based fibers such as those of polyamide 6, polyamide 66, polyamide 11, polyamide 12, polyamide 610 and polyamide 612, semi-aromatic polyamide-based fibers, and aromatic polyamide-based fibers such as those of polyphenyleneisophthalamide, polyhexamethyleneterephthalamide and poly-p-phenyleneterephthalamide); polyolefin-based fibers (e.g., poly-$C_{2-4}$ olefin fibers such as those of polyethylene and polypropylene); acrylic fibers (e.g., acrylonitrile-based fibers having an acrylonitrile unit, such as acrylonitrile-vinyl chloride copolymers); polyvinyl-based fibers (e.g., polyvinyl acetal-based fibers); polyvinyl chloride-based fibers (e.g., fibers of polyvinyl chloride, vinyl chloride-vinyl acetate copolymers and vinyl chloride-acrylonitrile copolymers); polyvinylidene chloride-based fibers (e.g., fibers of vinylidene chloride-vinyl chloride copolymers and vinylidene chloride-vinyl acetate copolymers); poly-p-phenylenebenzobisoxazole fibers; polyphenylene sulfide fibers; and cellulose-based fibers. The non-wet-heat-adhesive resins may be used singly, or in combination of two or more kinds thereof. The average fineness and the average fiber length of non-wet-heat-adhesive fibers can be the same as those of wet-heat-adhesive fibers.

For example, when hydrophilic cellulose-based fibers such as those of rayon are combined with wet-heat-adhesive fibers including an ethylene-vinyl alcohol copolymer, shrinkage is promoted and adhesiveness is improved due to high affinity between the fibers, so that second fiber layer 21 having a relatively high density and high mechanical strength and necking resistance can be obtained. When polyester-based fibers having low moisture absorbency (e.g., polyethylene terephthalate fibers), etc. are combined with wet-heat-adhesive fibers including an ethylene-vinyl alcohol copolymer, second fiber layer 21 excellent in lightness can be obtained. When hydrophilic fibers are used as non-wet-heat-adhesive fibers, the water retainability of water absorbent laminate 100 tends to be improved.

The ratio (mass ratio) between wet-heat-adhesive fibers and non-wet-heat-adhesive fibers (wet-heat-adhesive fibers/non-wet-heat-adhesive fibers) in the second fiber assembly forming second fiber layer 21 is 80/20 to 100/0, preferably 90/10 to 100/0, more preferably 95/5 to 100/0. When the ratio of wet-heat-adhesive fibers is in the range as described above, excellent water retainability, mechanical strength and necking resistance can be imparted to water absorbent laminate 100.

Fibers forming the second fiber assembly may contain one or more additives as necessary. Specific examples of the additive include colorants, heat stabilizers, ultraviolet absorbers, light stabilizers, antioxidants, fine particles, crystallization rate retarders, antistatic agents, flame retardants, plasticizers and lubricants. The additive may be carried on the surfaces of fibers, or contained in fibers.

Second fiber layer 21 can be a nonwoven fiber assembly obtained from a web made of the above-mentioned fibers. Preferably, the arrangement state and the bonding state of fibers forming the web of the nonwoven fiber assembly are properly adjusted. Preferably, fibers forming the fiber web are arranged so as to mutually cross while being arranged generally parallel to a surface of the fiber web (nonwoven fiber assembly). Preferably, fibers are fused at an intersection where the fibers cross. Particularly, in the case where high hardness and mechanical strength are required, bundle-shaped fused fibers with several to several tens of fibers fused in a bundle shape may be formed at a part other than the intersection, where fibers are arranged substantially parallel to one another. By partially forming structures in which these fibers are fused at intersections between single fibers, intersections between bundle-shaped fibers or intersections between single fibers and bundle-shaped fibers, second fiber layer 21 having a structure in which fibers are bonded together at intersections to intertwine with one another like a network, or a structure in which fibers are bonded together at intersections to mutually restrain neighboring fibers, with a passage being formed by properly small gaps, is formed. Preferably, these structures are generally uniformly distributed along the surface direction and the thickness direction of the fiber web. Water absorbent laminate 100 including second fiber layer 21 as described above is excellent in water absorbency, water retainability, necking resistance, cushioning property, and permeability of absorbed water into second fiber layer 21.

The phrase "arranged generally parallel to a surface of the fiber web" refers to a state in which a part where locally a large number of fibers are arranged along the thickness direction does not repeatedly occur. More specifically, this is a state in which in microscopic observation of any cross-section of a fiber web of a nonwoven fiber assembly, the abundance ratio (number ratio) of fibers extending continuously in the thickness direction over at least 30% of the thickness of the fiber web is less than or equal to 10% (particularly less than or equal to 5%) based on the total number of fibers on the cross-section.

The reason why fibers are arranged parallel to a surface of the fiber web is as follows: when there exist a large number of fibers oriented along the thickness direction (direction perpendicular to the web surface), disturbances in fiber arrangement occur on the periphery, and thus gaps larger than necessary are formed in nonwoven fibers, so that necking resistance etc. tend to be reduced. Therefore, it is preferable that the number of such large gaps is reduced as much as possible, and thus it is desirable to arrange fibers parallel to a surface of the fiber web where possible.

The second fiber assembly forming second fiber layer 21 is preferably a nonwoven fiber assembly in which fibers forming the second fiber assembly are partially bonded and fixed by fusion of wet-heat-adhesive fibers, and it is preferable that the fibers are bonded in a ratio less than or equal to 85% (e.g., 1 to 85%) in terms of a fiber bonding rate by fusion of wet-heat-adhesive fibers. The fiber bonding rate is more preferably 3 to 70%, still more preferably 5 to 60% (particularly 10 to 35%).

The fiber bonding rate is a rate of the number of cross-sections of two or more bonded fibers to the number of cross-sections of all the fibers in the nonwoven fiber assembly (second fiber assembly). A low fiber bonding rate means that the rate of fusion of a plurality of fibers (rate of bundled and fused fibers) is low.

The fiber bonding rate that shows a degree of fusion can be easily and conveniently measured by taking a photograph of an enlarged cross-section of the nonwoven fiber assembly (second fiber assembly) using a scanning electron microscope (SEM), and performing calculation on the basis of the number of bonded fiber cross-sections in a predetermined region. However, in the case where fibers arc fused in a bundle shape, it may be difficult to observe a cross-section of a single fiber. For example, in the case where the nonwoven fiber assembly has fibers bonded as core-sheath-type fibers formed of a sheath part composed of wet-heat-adhesive fibers and a core part composed of a fiber forming polymer, the fiber bonding rate can be measured by releasing fusion of the bonded part by means of melting, washing and removing or the like, and comparing released cross-sections with the cross-sections before releasing the fusion.

It is preferable that in fibers forming the nonwoven fiber assembly, bonding points of fibers are uniformly distributed from a surface to the inside (center) and to the back surface of the nonwoven fiber assembly along the thickness direction. When bonding points are localized, for example, at the surface or the inside, it may be impossible to obtain sufficient necking resistance, and form stability is deteriorated at a part where the number of bonding points is small. When bonding points of fibers are localized, for example, at the surface or the inside, proper gaps cannot be formed, and thus water retainability, cushioning property, and permeability of absorbed water into second fiber layer 21 tend to be deteriorated. Therefore, it is preferable that in a cross-section of the nonwoven fiber assembly in the thickness direction, the fiber bonding rate in each of regions obtained by dividing the assembly into three equal parts in the thickness direction is in the range as described above.

The difference between the maximum value and the minimum value of the fiber bonding rate in each region is less than or equal to 20% (e.g., 0.1 to 20%), preferably less than or equal to 15% (e.g., 0.5 to 15%), more preferably less than or equal to 10% (e.g., 1 to 10%), or the ratio of the minimum value to the maximum value of the fiber bonding rate in each region (minimum value/maximum value) (ratio of a region with the fiber bonding rate being minimum to a region with the fiber bonding rate being maximum) is, for example, greater than or equal to 50% (e.g., 50 to 100%), preferably 55 to 99%, more preferably 60 to 98% (particularly 70 to 97%). When the fiber bonding rate has such uniformity in the thickness direction, the nonwoven fiber assembly is excellent in hardness, flexural strength, bending resistance, toughness and necking resistance, etc. The term "regions obtained by dividing the assembly into three equal parts in the thickness direction" means regions obtained by dividing the nonwoven fiber assembly (second fiber layer 21) into three equal parts by slicing the nonwoven fiber assembly in a direction orthogonal to the thickness direction of the nonwoven fiber assembly (the same applies to the following).

The porosity of second fiber layer 21 in water absorbent laminate 100 is preferably greater than or equal to 70%, more preferably greater than or equal to 75%, still more preferably greater than or equal to 80% from the viewpoint of the water retainability, cushioning property and so on of water absorbent laminate 100. The porosity of second fiber layer 21 is usually less than or equal to 99%, more typically less than or equal to 95%.

The basis weight of second fiber layer 21 can be, for example, 20 to 1000 g/m$^2$, and is preferably 30 to 600 g/m$^2$, more preferably 50 to 400 g/m$^2$. When the basis weight is excessively small, at least one of water retainability, necking resistance and cushioning property tends to be insufficient. When the basis weight is excessively large, the web is too thick for high-temperature steam to sufficiently penetrate into the web in wet-heat (steam-jet) processing, so that it tends to be difficult to form a nonwoven fiber assembly that is uniform in the thickness direction.

The apparent density of second fiber layer 21 in water absorbent laminate 100 is preferably less than or equal to 0.5 g/cm$^3$, more preferably less than or equal to 0.4 g/cm$^3$, still more preferably less than or equal to 0.3 g/cm$^3$ (e.g., less than or equal to 0.2 g/cm$^3$, or even less than or equal to 0.15 g/cm$^3$). When the apparent density of second fiber layer 21 is excessively large, the water retainability and cushioning property of water absorbent laminate 100 are apt to be insufficient. The apparent density of second fiber layer 21 is usually greater than or equal to 0.01 g/cm$^3$, more typically greater than or equal to 0.05 g/cm$^3$. The water retainability of water absorbent laminate 100 can be improved by decreasing the apparent density.

The thickness of second fiber layer 21 in water absorbent laminate 100 is, for example, greater than or equal to 20 $\mu$m, and preferably greater than or equal to 100 $\mu$m, more preferably greater than or equal to 200 $\mu$m from the viewpoint of water absorbency, necking resistance and cushioning property. The thickness of second fiber layer 21 is usually less than or equal to 2000 $\mu$m, preferably less than or equal to 1000 $\mu$m, more preferably less than or equal to 800 $\mu$m for avoiding an excessive increase in mass of water absorbent laminate 100.

A method for producing the second fiber assembly as a nonwoven fiber assembly forming second fiber layer 21 will now be described. The second fiber assembly can be preferably produced by a steam-jet method in which a fiber web is exposed to high-temperature and high-pressure steam to be formed into a nonwoven fabric. In the production method, first, fibers including the wet-heat-adhesive fibers are formed into a web. As a method for forming a web, a common method, for example, a direct method such as a spunbond method or a melt-blow method; a card method using melt-blown fibers, staple fibers or the like; or a dry method such as an air-lay method can be used. Among these methods, a card method using melt-blown fibers or staple fibers, particularly a card method using staple fibers is commonly used. Examples of the web obtained using staple fibers include random webs, semi-random webs, parallel webs and cross-lap webs. In the case of increasing the ratio of bundle-shaped fused fibers, semi-random webs and parallel webs are preferable.

The obtained fiber web is then sent to the next process by a belt conveyor, where the fiber web is exposed to an overheated or high-temperature steam (high-pressure steam) flow to obtain a second fiber assembly as a nonwoven fiber assembly. Specifically, at the time when the fiber web conveyed by a belt conveyor passes through a high-speed and high-temperature steam flow jetted from a nozzle of a steam injection apparatus, fibers are three-dimensionally bonded together by sprayed high-temperature steam. By using a method for treating the fiber web with high-temperature steam, uniform fusion can be performed from the surface to the inside of the nonwoven fiber assembly.

While the belt conveyor to be used is basically not particularly limited as long as the fiber web can be treated with high-temperature steam while being compressed to an intended density, an endless conveyor is suitably used. As necessary, two belt conveyors may be combined to convey the fiber web with the fiber web sandwiched between both the belts. When such a conveyance method is used, the fiber web can be inhibited from being deformed by water used for treatment, high-temperature steam, and external forces from vibrations of the conveyor, etc. in treatment of the fiber web. The apparent density and the thickness of the resulting nonwoven fiber assembly can also be controlled by adjusting the distance between belts

A common steam injection apparatus is used for supplying steam to the fiber web. The steam injection apparatus is preferably an apparatus capable of generally uniformly spraying steam over the whole width of the web with a desired pressure and amount. In the case where two belt conveyors are combined, steam is supplied to the fiber web through a conveyor belt mounted in one of the conveyors and having air permeability, or a conveyor net placed on the conveyor. A suction box may be mounted in the other conveyor. When the suction box is installed, excess steam passing through the fiber web can be suctioned and discharged. Further, in the conveyor on a side opposite to the conveyor in which the steam injection apparatus is mounted and at a downstream part from the part at which the steam injection apparatus is mounted, another steam injection apparatus may be installed for treating both the front and the back of the fiber web with steam at a time. For treating the front and the back of the fiber web with steam in the case where a steam injection apparatus at the downstream part and a suction box are absent, the front and the back of the fiber web treated once may be reversed, followed by causing the fiber web to pass through the treatment apparatus again.

The endless belt that can be used in the conveyor is not particularly limited as long as it does not obstruct conveyance of the fiber web and the high-temperature steam treatment. However, when the fiber web is treated with high-temperature steam, a surface shape of the belt may be transferred to a surface of the fiber web depending on the treatment conditions, and therefore it is preferable to select a proper endless belt according to the use purpose. Particularly, in the case where it is desired to obtain a nonwoven fiber assembly having a flat surface, use of a net of fine meshes is preferable. The upper limit of the mesh size is about 90 mesh, and generally a net coarser than that of 90 mesh (e.g., a net of about 10 to 50 mesh) is preferable. A net of finer meshes has low air permeability, so that steam hardly passes through the net. As a material of the mesh belt, a metal, a heat-resistant resin such as a polyester-based resin, a polyphenylene sulfide-based resin, a polyarylate-based resin (fully aromatic polyester-based resin) or an aromatic polyamide-based resin that are subjected to a heat-resistance treatment, or the like is preferably used from the viewpoint of heat resistance to a steam treatment, etc.

High-temperature steam injected from the steam injection apparatus is a gas flow, and therefore penetrates into the fiber web without significantly moving fibers in the fiber web as an object to be treated, unlike a water flow interlacement treatment and a needle punching treatment. It is considered that due to the penetration action of the steam flow into the fiber web and the wet heat action, the surfaces of fibers existing in the fiber web are efficiently covered with the steam flow in a wet-heat state, so that uniform heat bonding can be performed. This treatment is performed under a high-speed gas flow in an extremely short time, and therefore while heat is sufficiently conducted from the steam to the surfaces of fibers, the treatment is completed before heat is sufficiently conducted into the fibers, so that deformation such as collapse of the whole fiber web to be treated, or loss of the thickness of the fiber web is hardly caused by a pressure and heat from high-temperature steam. As a result, the fiber web is not significantly deformed, and wet-heat bonding is achieved such that the degree of bonding in surface and thickness directions is generally uniform. As compared to a dry-heat treatment, heat can be more sufficiently conducted into the nonwoven fiber assembly, and therefore the degree of fusion in surface and thickness directions is generally uniform.

At the time of treating the fiber web by supplying high-temperature steam to the fiber web in order to improve water retainability, necking resistance and so on, the fiber web may be exposed to the high-temperature steam while being compressed to an intended apparent density between conveyor belts or between rollers. The fiber web can also be adjusted to have an intended thickness and an intended apparent density by providing a proper clearance between rollers or between conveyors. In the case of conveyors, it is difficult to instantly compress the fiber web, and therefore it is preferable that the tension of the belt is set as high as possible, and the clearance is gradually narrowed from the upstream of the steam treatment spot. The various physical properties such as the porosity and apparent density, the water retainability, necking resistance, cushioning property and so on of the resulting nonwoven fiber assembly can also be adjusted by adjustment of the steam pressure, the treatment rate and so on.

As a nozzle for injecting high-temperature steam, a plate or die with predetermined orifices continuously arranged in the width direction may be disposed in such a manner that the orifices are arranged in the width direction of a fiber web to be supplied with the steam. The number of orifice lines may be at least one. A plurality of orifice lines may be arranged in parallel. A plurality of nozzle dies each having one orifice line may be installed in parallel.

In the case where a nozzle obtained by providing a plate with orifices is used, the thickness of the plate may be about 0.5 to 1 mm. While the diameter and pitch of the orifices are not particularly limited as long as conditions under which intended fibers can be fixed are satisfied, the diameter of the orifice is usually 0.05 to 2 mm, preferably 0.1 to 1 mm, more preferably 0.2 to 0.5 mm. The pitch of the orifices is usually 0.5 to 3 mm, preferably 1 to 2.5 mm, more preferably 1 to 1.5 mm. An excessively small diameter of the orifice is apt to cause the equipment-related problem that processing accuracy of the nozzle is deteriorated, and thus processing becomes difficult, and the operation-related problem that clogging easily occurs. Conversely, when the diameter of the orifice is excessively large, steam injection power is reduced. When the pitch is excessively small, the nozzle holes are excessively dense, so that the strength of the nozzle itself is reduced. When the pitch is excessively large, high-temperature steam may fail to be sufficiently applied to the fiber web, leading to a reduction in web strength.

While the high-temperature steam is not particularly limited as long as intended fibers can be fixed, and conditions may be set according to the material and form of fibers to be used, the steam pressure is, for example, 0.1 to 2 MPa, preferably 0.2 to 1.5 MPa, more preferably 0.3 to 1 MPa. When the steam pressure is excessively high, fibers forming the fiber web may move more than necessary, resulting in texture disorder, or fibers may be excessively melted, thus making it impossible to retain the fiber shape in part. When the steam pressure is excessively low, an amount of heat necessary for fusion of fibers cannot be given to the fiber web, or steam may be impossible to pass through the fiber web, leading to occurrence of fiber fusion unevenness in the thickness direction, and also it may be difficult to control uniform jetting of steam from the nozzle.

The temperature of high-temperature steam is, for example, 70 to 150°C, preferably 80 to 120°C, more preferably 90 to 110°C. The treatment rate of high-temperature steam is, for example, less than or equal to 200 m/minute, preferably 0.1 to 100 m/minute, more preferably 1 to 50 m/minute.

The obtained nonwoven fiber assembly may be dried as necessary. In the drying, the form of fibers on a surface of the nonwoven fiber assembly coming into contact with a heater for drying must not be lost due to, for example, melting of fibers, and a common method can be used as long as the form of fibers can be maintained. For example, large drying equipment such as a cylinder dryer or a tenter that is used for drying a nonwoven fabric may be used. However, since mostly the amount of remaining water is very small, and thus the nonwoven fiber assembly can be dried by relatively minor drying means, a non-contact method such as far-infrared ray irradiation, microwave irradiation or electron beam irradiation, or a method using hot air is preferable.

As described above, the nonwoven fiber assembly forming second fiber layer 21 is obtained by bonding wet-heat-adhesive fibers by high-temperature steam, but in part, fibers may be bonded by other treatment methods such as heat embossing and needle punching.

(3) Configuration, Properties and Uses of Water Absorbent Laminate

Water absorbent laminate 100 according to this embodiment is formed by joining (uniting) second fiber layer 21 directly onto first fiber layer 10 Preferably, the joining is performed by interlacement of fibers, fusion of fibers, or the like, and bonding with, for example, an adhesive is avoided. When the joining is performed by interlacement or fusion of fibers, high continuity between the gaps of first fiber layer 10 and the second fiber layer can be maintained, and therefore high water retainability, high water absorbency, high permeability of absorbed water into second fiber layer 21, etc. can be achieved.

The basis weight of water absorbent laminate 100 is, for example, 20 to 1100 g/m$^2$, preferably 30 to 700 g/m$^2$, more preferably 60 to 500 g/m$^2$ (e.g., 100 to 300 g/m$^2$). It is advantageous in terms of water retainability, permeability of absorbed water into second fiber layer 21, necking resistance, cushioning property and so on that the basis weight of water absorbent laminate 100 is in the range as described above.

Water absorbent laminate 100 has high water absorbency, and the water retention rate of water absorbent laminate 100 as defined in Section 6.9.2 in "General Nonwoven Fabric Test Method" in JIS L 1913 may be, for example, greater than or equal to 200%, or greater than or equal to 300%, or even greater than or equal to 400%. Water retainability can be improved by, for example, increasing the thickness or the porosity of second fiber layer 21, or decreasing the apparent density or the fiber bonding rate of second fiber layer 21.

Water absorbent laminate 100 can have excellent necking resistance, and accordingly, in the case where water absorbent laminate 100 is used as a wiping material, wiping operations can be performed uniformly for a surface of an object to be wiped. The low elongation in wetting of water absorbent laminate 100, which is an index of necking resistance, may be, for example, greater than or equal to 160 N/5 cm, or even greater than or equal to 180 N/5 cm (e.g., greater than or equal to 200 N/5 cm) in terms of a longitudinal tensile strength in wetting as defined in Section 6.3.2 in "General Nonwoven Fabric Test Method" in JIS L 1913. When the longitudinal tensile strength in wetting is below the range as described above, necking may occur during wiping operations, so that wiping operations may become unstable, thus making it difficult to perform uniform wiping operations.

Water absorbent laminate 100 can have excellent cushioning property (compressive elastic modulus), and accordingly, damage to a surface of an object to be wiped can be effectively suppressed. For improving cushioning property, for example, the apparent density of water absorbent laminate 100 may be decreased, or the thickness of water absorbent laminate 100 may be increased.

Water absorbent laminate 100 can be suitably used as various kinds of water absorbent materials in general consumer and general household applications or industrial applications. The water absorbent material is a material or product for absorbing water or a water-containing substance for some purpose, as well as a material or product for retaining absorbed water. Water absorbent laminate 100 is excellent in not only water absorbency but also water retainability, and therefore particularly effective in water absorbent material applications in which it is required to retain absorbed water.

Examples of the applicable absorbent material include wiping materials (e.g., wipers and waste clothes) for wiping off water or deposits containing water along with other components from surfaces of various kinds of objects; skin care sheets such as face masks; body fluid absorbing sheets such as disposable diapers; dew condensation preventing materials; and packaging materials having a moisture leakage preventing function. In particular, water absorbent laminate 100 can be suitably used as a wiping material for absorbing water, and also trapping and removing particles (solid substance) deposited on a surface of an object by utilizing pores of first fiber layer 10. One example of these applications is a wiping material (cleaning tape) for wiping off an abrasive grain slurry (water with abrasive grains dispersed therein) deposited on a board of a substrate such as a hard disk board after a step of polishing the board. For example, in production of hard disks, free abrasive grains (polishing agent) are deposited on a surface of a polishing cloth (nonwoven fabric, woven fabric or the like) to texture or polish a surface of a substrate, and water absorbent laminate 100 can also be used as such a polishing cloth.

(4) Production of Water Absorbent Laminate

As described above, first fiber layer 10 (first fiber assembly) and second fiber layer 21 (second fiber assembly) are joined together (united) preferably by interlacement of fibers, fusion of fibers or the like in production of water absorbent laminate 100. Examples of the interlacement method may include a spunlace method and a needle punching method, and examples of the fusion method may include a steam-jet method. The steam-jet method is a method that can be used in the case where at least one of the fiber layers to be joined together include wet-heat-adhesive fibers. Since second fiber layer 21 forming water absorbent laminate 100 includes wet-heat-adhesive fibers, the steam-jet method can be applied to production of water absorbent laminate 100. According to the method for joining the layers together by interlacement of fibers or fusion of fibers, high continuity between the gaps of first fiber layer 10 and the gaps of second fiber layer 21 can be maintained, and therefore high water retainability and high water absorbency can be achieved.

In particular, the spunlace method is preferably used because high continuity as described above is relatively easily attained. In the case of the steam-jet method, pores are closed to deteriorate continuity if fusion of fibers is excessively advanced. In the case of the needle punching method, it may be impossible to obtain good bondability while securing high continuity particularly when fiber assemblies having a small basis weight are joined together.

<Embodiment 2>

Fig. 2 is a sectional view schematically showing one example of a water absorbent laminate according to this embodiment. A water absorbent laminate 200 shown in Fig. 2 has the same configuration as in Embodiment 1 except that in place of second fiber layer 21, a second fiber layer 22 is stacked on one side of first fiber layer 10 in the thickness direction. Second fiber layer 22 is composed of a nonwoven fiber assembly including wet-heat-adhesive fibers, and potentially crimpable composite fibers in which a plurality of resins having different thermal shrinkage ratios (or thermal expansion coefficients) form a phase-separated structure.

In the nonwoven fiber assembly (second fiber assembly) forming second fiber layer 22, wet-heat-adhesive fibers are substantially uniformly fused therein, and potentially crimpable composite fibers are substantially uniformly crimped with an average curvature radius of 20 to 200 $\mu$m, so that the fibers are sufficiently interlaced. The nonwoven fiber assembly (second fiber layer 22) is obtained by applying high-temperature (overheated or heated) steam to a web including wet-heat-adhesive fibers and potentially crimpable composite fibers, so that a bonding action is exhibited at a temperature less than or equal to the melting point of the wet-heat-adhesive fibers to partially bond/fix the fibers, and the potentially crimpable composite fibers are caused to develop crimps to mechanically interlace the fibers. The same effect as in Embodiment 1 can also be obtained by stacking second fiber layer 22 on one side of first fiber layer 10 in the thickness direction. According to this embodiment, the cushioning property of water absorbent laminate 200 can be further improved by interlacement due to crimping of potentially crimpable composite fibers.

In this embodiment, the second fiber assembly includes wet-heat-adhesive fibers and potentially crimpable composite fibers. The wet-heat-adhesive fibers can be the same as the wet-heat-adhesive fibers used in second fiber layer 21 in Embodiment 1, and details thereof are as described above.

The potentially crimpable composite fiber is a fiber (potential-crimp fiber) having an asymmetric or layered (so-called bimetal) structure which is crimped by heating due to a difference in thermal shrinkage ratio (or thermal expansion coefficient) among a plurality of resins. A plurality of resins usually have mutually different softening points or melting points. A plurality of resins can be selected from thermoplastic resins such as, for example, polyolefin-based resins (e.g., poly-$C_{2-4}$ olefin-based resins such as low-density, medium-density or high-density polyethylene and polypropylene); acrylic resins (e.g., acrylonitrile-based resins having an acrylonitrile unit, such as acrylonitrile-vinyl chloride copolymers); polyvinyl acetal-based resins (e.g., polyvinyl acetal resins); polyvinyl chloride-based resins (e.g., polyvinyl chloride, vinyl chloride-vinyl acetate copolymers and vinyl chloride-acrylonitrile copolymers), polyvinylidene chloride-based resins (e.g., vinylidene chloride-vinyl chloride copolymers and vinylidene chloride-vinyl acetate copolymers); styrene-based resins (e.g., heat-resistant polystyrene), polyester-based resins (poly-$C_{2-4}$ alkylene arylate-based resins such as polyethylene terephthalate resins, polytrimethylene terephthalate resins, polybutylene terephthalate resins and polyethylene naphthalate resins); polyamide-based resins [e.g., aliphatic polyamide-based resins such as polyamide 6, polyamide 66, polyamide 11, polyamide 12, polyamide 610, polyamide 612, polyamide 92 and polyamide 9C (a polyamide composed of nonanediamine and cyclohexanedicarboxylic acid), and copolymers thereof, semi-aromatic polyamide-based resins such as polyamide 9T (a polyamide composed of nonanediamine and terephthalic acid), and copolymers thereof, and aromatic polyamide-based resins such as polyphenyleneisophthalamide, polyhexamethyleneterephthalamide and poly-p-phenyleneterephthalamide, and copolymers thereof]; polycarbonate-based resins (e.g., bisphenol A-type polycarbonate); poly-p-phenylenebenzobisoxazole resins, polyphenylene sulfide resins, polyurethane-based resins and cellulose-based resins (e.g., cellulose esters). The thermoplastic resins may include units derived from other copolymerizable monomers.

Among the thermoplastic resins, non-wet-heat-adhesive resins (or heat-resistant hydrophobic resins or nonaqueous resins) having a softening point or melting point greater than or equal to 100°C, such as, for example, polypropylene-based resins, polyester-based resins and polyamide-based resins are preferable because fibers are not melted or softened to be fused even when subjected to a heating and humidification treatment with high-temperature steam. Particularly, aromatic polyester-based resins and polyamide-based resins are preferable because they are excellent in balance among heat resistance, fiber formability and so on. The resin exposed to the surfaces of potentially crimpable composite fibers is preferably a non-wet-heat-adhesive fiber so that the potentially crimpable composite fibers are not fused even when treated with high-temperature steam.

A plurality of resins forming the potentially crimpable composite fiber may have different thermal shrinkage ratios (or thermal expansion coefficients), and may constitute a combination of resins of the same kind, or a combination of different kinds of resins.

Preferably, a plurality of resins forming the potentially crimpable composite fiber constitute a combination of resins of the same kind from the viewpoint of adhesiveness. In this case, usually a combination of a component (A) forming a homopolymer (essential component) and a component (B) forming a modification polymer (copolymer) is used. For example, a copolymerizable monomer for reducing the crystallization degree, the melting point, the softening point, or the like is copolymerized with the homopolymer as an essential component to perform modification, whereby the crystallization degree is reduced as compared to the homopolymer, or the polymer is made noncrystalline to reduce the melting point or softening point as compared to the homopolymer. This causes a difference in thermal shrinkage ratio. The difference in melting point or softening point is, for example, 5 to 150°C, preferably 50 to 130°C, more preferably 70 to 120°C. The ratio of the copolymerizable monomer to be used for modification is, for example, 1 to 50 mol%, preferably 2 to 40 mol%, more preferably 3 to 30 mol% (particularly 5 to 20 mol%) based on the amount of all the monomers. While the combination ratio (mass ratio) between the component forming a homopolymer and the component forming a modification polymer can be selected according to the structure of fibers, the ratio (homopolymer component (A)/modification polymer component (B)) is, for example, 90/10 to 10/90, preferably 70/30 to 30/70, more preferably 60/40 to 40/60.

A plurality of resins forming the potentially crimpable composite fiber preferably constitute a combination of aromatic polyester-based resins, more preferably a combination of a polyalkylene arylate-based resin (a) and a modified polyalkylene arylate-based resin (b) because the potentially crimpable composite fibers are easily produced. Particularly, a type in which crimps are developed after formation of a web is preferable, and in this respect, the above-mentioned combination is preferable. When crimps are developed after formation of a web, fibers are efficiently interlaced, and the form of the web can be retained with a smaller number of fusion points, so that good water retainability, cushioning property, necking resistance and so on can be achieved.

The polyalkylene arylate-based resin (a) can be a homopolymer of an aromatic dicarboxylic acid (e.g., a symmetric aromatic dicarboxylic acid such as terephthalic acid or naphthalene-2,6-dicarboxylic acid) and an alkanediol component (a $C_{3-6}$ alkanediol such as ethylene glycol or butylene glycol). Specifically, a poly-$C_{2-4}$ alkylene terephthalate-based resin such as polyethylene terephthalate (PET) or polybutylene terephthalate (PBT), or the like is used, and usually, PET for use in general PET fibers having an intrinsic viscosity of about 0.6 to 0.7 is used.

As a copolymerization component for reducing the melting point or softening point and the crystallization degree of the polyalkylene arylate-based resin (a) as an essentially component, in the modified polyalkylene arylate-based resin (b), for example, a dicarboxylic acid component such as an asymmetric aromatic dicarboxylic acid, an alicyclic dicarboxylic acid or an aliphatic dicarboxylic acid, or an alkanediol component having a chain length longer than that of the alkanediol component forming the polyalkylene arylate-based resin (a), and/or an ether bond-containing diol component can be used. The copolymerization components may be used singly, or in combination of two or more kinds thereof.

Preferred examples of the dicarboxylic acid component include asymmetric aromatic carboxylic acids (e.g., isophthalic acid, phthalic acid and 5-sodium sulfoisophthalic acid), and aliphatic dicarboxylic acids ($C_{6-12}$ aliphatic dicarboxylic acids such as adipic acid). Preferred examples of the diol component include alkanediols (e.g., $C_{3-6}$ alkanediols such as 1,3-propanediol, 1,4-butanediol, 1,6-hexanediol and neopentyl glycol), and (poly)oxyalkylene glycols (e.g., polyoxy-$C_{2-4}$ alkylene glycols such as diethylene glycol, triethylene glycol, polyethylene glycol and polytetramethylene glycol). Among them, asymmetric aromatic dicarboxylic acids such as isophthalic acid, and polyoxy-$C_{2-4}$ alkylene glycols

such as diethylene glycol are more preferable. The modified polyalkylene arylate-based resin (b) may be an elastomer having a $C_{2-4}$ alkylene arylate (e.g., ethylene terephthalate or butylene terephthalate) as a hard segment and a (poly)oxyalkylene glycol etc. as a soft segment

In the modified polyalkylene arylate-based resin (b), the ratio of a dicarboxylic acid component (e.g., isophthalic acid) for reducing the melting point or softening point is, for example, 1 to 50 mol%, preferably 5 to 50 mol%, more preferably 15 to 40 mol% based on the total amount of dicarboxylic acid components. The ratio of a diol component (e.g., diethylene glycol) for reducing the melting point or softening point is, for example, less than or equal to 30 mol%, preferably less than or equal to 10 mol% (e.g., 0.1 to 10 mol%) based on the total amount of diol components. When the ratio of copolymerization components is excessively low, sufficient crimps are not developed, and thus the form stability of the nonwoven fiber assembly after development of crimps is deteriorated, and also, regarding improvement of water retainability, cushioning property and/or necking resistance etc., the effect of using potentially crimpable composite fibers is reduced, or any of the properties tends to be rather deteriorated as compared to a case where potentially crimpable composite fibers are not used. When the ratio of copolymerizable components is excessively high, crimp developing performance is improved, but it is difficult to stably perform spinning.

The modified polyalkylene arylate-based resin (b) may include units derived from polyvalent carboxylic acid components such as trimellitic acid and pyromellitic acid, polyol components such as glycerin, trimethylolpropane, trimethylolethane and pentaerythritol, and so on as necessary.

The transverse cross-sectional shape of the potentially crimpable composite fiber (cross-sectional shape perpendicular to the length direction of the fiber) is not limited to a general solid cross-sectional shape such as a perfectly circular shape or an irregular shape [flat shape, elliptical shape, polygonal shape, 3 to 14-foliated shape, T-shape, H-shape, V-shape, dog-bone (I-shape) or the like], and it may be, for example, a hollow cross-sectional shape. Usually, the transverse cross-sectional shape of the potentially crimpable composite fiber is a perfectly circular shape

The transverse cross-sectional structure of the potentially crimpable composite fiber can be a phase-separated structure formed of a plurality of resins, such as, for example, a structure of core-sheath type, sea-island type, blend type, parallel type (side-by-side type or multilayer lamination type), radial type (radial lamination type), hollow radial type, block type, random composite type or the like. In particular, a structure in which phase parts neighbor each other (so-called bimetal structure), and a structure in which the phase-separated structure is asymmetric, such as, for example, a structure of eccentric core-sheath type or parallel type are preferable because spontaneous crimps are easily developed by heating.

In the case where the potentially crimpable composite fiber has a structure of core-sheath type such as a structure of eccentric core-sheath type, the core part may be made from a wet-heat-adhesive resin (e.g., a vinyl alcohol-based polymer such as an ethylene-vinyl alcohol copolymer or polyvinyl alcohol), or a thermoplastic resin having a low melting point or softening point (e.g., polystyrene or low-density polyethylene) as long as there is a difference in thermal shrinkage between the core part and the sheath part situated at the surface and composed of a non-wet-heat-adhesive resin, and thus the fiber can be crimped.

The average fineness of potentially crimpable composite fibers can be selected from the range of, for example, 0.1 to 50 dtex, and is preferably 0.5 to 10 dtex, more preferably 1 to 5 dtex (particularly 1.5 to 3 dtex). When the average fineness is excessively small, it is difficult to produce fibers themselves, and it is also difficult to secure the fiber strength. Further, it is difficult to develop fine coil-shaped crimps in a step of developing crimps. When the average fineness is excessively large, fibers are rigid, so that it is difficult to develop sufficient crimps.

The average fiber length of potentially crimpable composite fibers can be selected from the range of, for example, 10 to 100 mm, and is preferably 20 to 80 mm, more preferably 25 to 75 mm (particularly 40 to 60 mm). When the average fiber length is excessively short, it is difficult to form a fiber web, and also in a step of developing crimps, interlacement of fibers is insufficient, resulting in poor strength, cushioning property and/or necking resistance, etc When the average fiber length is excessively long, it is difficult to form a fiber web with a uniform basis weight, and also, a large number of interlacements are developed at the time of forming the web, so that fibers obstruct one another at the time of developing crimps, resulting in insufficient strength, cushioning property and/or necking resistance, etc.

When potentially crimpable composite fibers are heat-treated, crimps are developed (appear) to form fibers having substantially coil-shaped (helical or spiral spring-shaped) three-dimensional crimps.

The number of crimps before heating (the number of mechanical crimps) is, for example, 0 to 30/25 mm, preferably 1 to 25/25 mm, more preferably 5 to 20/25 mm. The number of crimps after heating is, for example, greater than or equal to 30/25 mm (e.g., 30 to 200/25 mm), preferably 35 to 150/25 mm, more preferably 40 to 120/25 mm, or may be 45 to 120/25 mm (particularly 50 to 100/25 mm).

Potentially crimpable composite fibers included in the nonwoven fiber assembly (second fiber assembly forming second fiber layer 22) are crimped by high-temperature steam. Preferably, crimps of potentially crimpable composite fibers develop substantially uniformly in the nonwoven fiber assembly. Specifically, at the central part (inner layer) of each of regions obtained by dividing the assembly into three equal parts in the thickness direction in a cross-section in the thickness direction, the number of fibers forming a coil crimp of at least one round is, for example, 5 to 50/5 mm (length in the surface direction) $\times$ 0.2 mm (thickness), preferably 5 to 40/5 mm (length in the surface direction) $\times$ 0.2 mm (thickness), more preferably 10 to 40/5 mm (length in the surface direction) $\times$ 0.2 mm (thickness).

The uniformity of crimps in the nonwoven fiber assembly can also be evaluated by, for example, the uniformity of fiber curving ratios in the thickness direction. The fiber curving ratio is a ratio (L2/L1) of the fiber length (L2) to the distance (L1) between both ends of a fiber (crimped fiber). The fiber curving ratio (particularly the fiber curving ratio at the central region in the thickness direction) is, for example, greater than or equal to 1.3 (e.g., 1.35 to 5), preferably 1.4 to 4 (e.g., 1.5 to 3.5), more preferably 1.6 to 3 (particularly 1.8 to 2.5). The fiber curving ratio is measured on the basis of an electron-microscopic photograph of a cross-section of the nonwoven fiber assembly. Thus, the fiber length (L2) is a fiber length when a two-dimensionally crimped fiber appearing in an electron-microscopic photograph is extended into a straight line (photographic fiber length) rather than a fiber length when a three-dimensionally crimped fiber is extended into a straight line (true length).

When crimps are substantially uniformly developed in the nonwoven fiber assembly, fiber curving ratios are also uniform. The uniformity of fiber curving ratios can be evaluated by, for example, comparison of the fiber curving ratios in regions obtained by dividing the nonwoven fiber assembly into three equal parts in the thickness direction in a cross-section of the nonwoven fiber assembly in the thickness direction. Specifically, the fiber curving ratios in regions obtained by dividing the assembly into three equal parts in the thickness direction in a cross-section in the thickness direction are each in the range as described above, the ratio of the minimum value to the maximum value of the fiber curving ratio in each region (ratio of a region with the fiber curving ratio being minimum to a region with the fiber curving ratio being maximum) is, for example, greater than or equal to 75% (e.g., 75 to 100%), preferably 80 to 99%, more preferably 82 to 98% (particularly 85 to 97%).

As a specific method for measuring the fiber curving ratio and the uniformity thereof, a method is used in which a cross-section of the nonwoven fiber assembly is electron-microphotographed, and the fiber curving ratio is measured for a region selected from regions obtained by dividing the assembly into three equal parts in the thickness direction. The region to be measured is a region of at least 2 mm in the length direction for each of a surface layer (surface region), an inner layer (central region) and a back layer (back region) which are obtained by dividing the assembly into three equal parts. Regarding the thickness direction of the measurement regions, the measurement regions are set so as to have the same thickness width near the center of each layer. Further, the measurement regions are set in such a manner that the measurement regions are mutually parallel in the thickness direction, and each include at least 100 (preferably at least 300, more preferably about 500 to 1000) fiber pieces capable of being measured for the fiber curving ratio. After these measurement regions are set, the fiber curving ratios of all fibers in the regions are measured, the average value is calculated for each measurement region, and a region having the maximum average value and a region having the minimum average value are then compared to each other to calculate the uniformity of fiber curving ratios.

Crimped fibers forming the nonwoven fiber assembly have substantially coil-shaped crimps after development of crimps. The average curvature radius of circles formed by the coils of the crimped fibers can be selected from a range of, for example, about 10 to 250 $\mu$m, and is, for example, 20 to 200 $\mu$m (e.g., 50 to 200 $\mu$m), preferably 50 to 160 $\mu$m (e.g., 60 to 150 $\mu$m), more preferably 70 to 130 $\mu$m, and is usually about 20 to 150 $\mu$m (e.g., 30 to 100 $\mu$m). The average curvature radius is an index showing an average size of circles formed by the coils of crimped fibers, and in the case where this value is large, the formed coil has a loose shape, i.e., a shape having a small number of crimps. A small number of crimps is disadvantage in strength, cushioning property, necking resistance and so on because the number of interlacements of fibers also decreases. In the case where conversely, coil-shaped crimps having an excessively small average curvature radius are developed, fibers are not sufficiently interlaced, and thus it is difficult to secure the web strength.

In potentially crimpable composite fibers crimped in a coil shape, the average pitch of the coils is, for example, 0.03 to 0.5 mm, preferably 0.03 to 0.3 mm, more preferably 0.05 to 0.2 mm.

The ratio (mass ratio) between wet-heat-adhesive fibers and potentially crimpable composite fibers (wet-heat-adhesive fibers/potentially crimpable composite fibers) in the second fiber assembly forming second fiber layer 22 is 99/1 to 80/20, preferably 95/5 to 80/20, more preferably 90/10 to 80/20. When the ratio of wet-heat-adhesive fibers is in the range as described above, excellent water retainability, mechanical strength, necking resistance and cushioning property can be imparted to water absorbent laminate 200.

The second fiber assembly forming second fiber layer 22 may include fibers other than wet-heat-adhesive fibers and potentially crimpable composite fibers. Examples of the other fibers include regenerated fibers such as rayon fibers, semi-synthetic fibers such as acetate fibers, polyolefin-based fibers such as polypropylene and polyethylene fibers, polyester fibers and polyamide fibers. The other fiber is preferably a fiber of the same kind as the potentially crimpable composite fiber from the viewpoint of blending property etc., and for example, when the potentially crimpable composite fiber is a polyester-based fiber, the other fiber can be a polyester-based fiber.

Fibers forming the second fiber assembly may contain one or more additives as necessary. Specific examples of the additive include colorants, heat stabilizers, ultraviolet absorbers, light stabilizers, antioxidants, fine particles, crystallization rate retarders, antistatic agents, flame retardants, plasticizers and lubricants. The additive may be carried on the surfaces of fibers, or contained in fibers.

Second fiber layer 22 can be a nonwoven fiber assembly obtained from a web made of the above-mentioned fibers. Preferably, the arrangement state and the bonding state of fibers forming the web of the nonwoven fiber assembly are properly adjusted. Specifically, it is preferable that in the nonwoven fiber assembly including potentially crimpable composite fibers, wet-heat-adhesive fibers are fused at intersections with crimped potentially crimpable composite fibers or other wet-heat-adhesive fibers (i.e., intersections between wet-heat-adhesive fibers or intersections between wet-heat-adhesive fibers and crimped potentially crimpable composite fibers). Accordingly, second fiber layer 22 with a passage formed by properly small gaps is formed. For retaining the form of the nonwoven fiber assembly with the smallest possible number of contact points, it is preferable that the bonding points are generally uniformly distributed from the vicinity of a surface to the inside of the nonwoven fiber assembly, and more specifically, it is preferable that the bonding points are uniformly distributed from a surface to the inside (center), and to the back surface of the nonwoven fiber assembly along the surface direction and the thickness direction (particularly in the thickness direction where it is difficult to obtain uniformity). When bonding points are localized, for example, at the surface or the inside, cushioning property and necking resistance are deteriorated, and form stability is deteriorated at a part where the number of bonding points is small.

Specifically, the second fiber assembly forming second fiber layer 22 is preferably a nonwoven fiber assembly in which fibers forming the second fiber assembly are partially bonded and fixed by fusion of wet-heat-adhesive fibers, and it is preferable that the fibers are bonded in a ratio less than or equal to 45% (e.g., 1 to 45% or 1 to 30%) in terms of a fiber bonding rate by fusion of wet-heat-adhesive fibers. The definition of the fiber bonding rate is as described above. Since the fiber bonding rate is low, good cushioning property can be obtained along with coil-shaped crimps of potentially crimpable composite fibers.

Regarding uniformity of fusion, it is preferable that in a cross-section of the nonwoven fiber assembly in the thickness direction, the fiber bonding rate in each of regions obtained by dividing the assembly into three equal parts in the thickness direction is in the range as described above. The ratio of the minimum value to the maximum value (minimum value/maximum value) of the fiber bonding rate in each region is, for example, greater than or equal to 50% (e.g., 50 to 100%), preferably 55 to 99%, more preferably 60 to 98% (particularly 70 to 97%). When the fiber bonding rate has such uniformity in the thickness direction, cushioning property etc. can be improved while the form is retained even with a small number of fusion points.

For obtaining a nonwoven fiber assembly having water retainability and cushioning property with a good balance, it is preferable that the bonding state of fibers is properly adjusted by fusion of wet-heat-adhesive fibers, and potentially crimpable composite fibers are crimped, whereby fibers neighboring or crossing one another are interlaced at crimp coil parts. The nonwoven fiber assembly including potentially crimpable fibers has such a structure that crimps of potentially crimpable composite fibers are developed to change the shape of the fibers into a coil shape, and thus at crimp coil parts, fibers neighboring or crossing one another (crimped fibers, or crimped fibers and wet-heat-adhesive fibers) are interlaced to be restrained or locked.

Fibers forming the nonwoven fiber assembly (coil axis direction for coil-shaped crimped fibers) may be arranged so as to cross one another while being arranged generally parallel to a surface of the nonwoven fiber assembly. The phrase "arranged parallel to a surface of the nonwoven fiber assembly" refers to a state in which a part where locally a large number of fibers are arranged along the thickness direction does not repeatedly occur. When there exist a large number of fibers oriented in the thickness direction, these fibers form coil-shaped crimps, so that fibers are extremely complicatedly interlaced, and resultantly, cushioning property tends to be deteriorated.

The porosity of second fiber layer 22 in water absorbent laminate 200 is preferably greater than or equal to 70%, more preferably greater than or equal to 75%, still more preferably greater than or equal to 80% from the viewpoint of the water retainability, cushioning property and so on of water absorbent laminate 200. The porosity of second fiber layer 22 is usually less than or equal to 99%, more typically less than or equal to 95%.

The basis weight, the apparent density and the thickness of second fiber layer 22 can be the same as those of second fiber layer 21 in Embodiment 1, and details thereof are as described above.

Like second fiber layer 21 in Embodiment 1, the second fiber assembly as a nonwoven fiber assembly forming second fiber layer 22 can be preferably produced by a steam-jet method in which a fiber web is exposed to high-temperature and high-pressure steam to be formed into a nonwoven fabric. In this case, fibers are three-dimensionally bonded together by fusion of wet-heat-adhesive fibers, and fibers are interlaced by development of crimps of potentially crimpable composite fibers. Uniform fusion can be performed in the nonwoven fiber assembly, and uniform crimps can be developed from a surface to the inside of the nonwoven fiber assembly

The configuration, properties and uses, and production of water absorbent laminate 200 can be the same as those of water absorbent laminate 100 in Embodiment 1, and details thereof are as described above.

<Embodiment 3>

Fig. 3 is a sectional view schematically showing one example of a water absorbent laminate according to this embodiment. A water absorbent laminate 300 shown in Fig. 3 has the same configuration as in Embodiment 1 except that second fiber layer 21 is stacked on one side of first fiber layer 10 in the thickness direction with a third fiber layer 30 interposed therebetween. Thus, as long as the water absorbent laminate of the present invention includes a first fiber layer and a second fiber layer, a third fiber layer may be interposed between the first fiber layer and the second fiber layer. Third fiber layer 30 is a layer made of a third fiber assembly, and the third fiber assembly includes hydrophilic fibers (second hydrophilic fibers). By interposing third fiber layer 30, the water retainability, tensile strength, cushioning property and so on of the water absorbent laminate can be further improved. In water absorbent laminate 300, second fiber layer 22 used in Embodiment 2 can be used in place of second fiber layer 21.

The hydrophilic fibers forming the third fiber assembly can be synthetic fibers, natural fibers, regenerated fibers or the like. The hydrophilic fibers may be used singly, or in combination of two or more kinds thereof. As the hydrophilic fibers (second hydrophilic fibers) forming the third fiber assembly, those that are the same as hydrophilic fibers (first hydrophilic fibers) forming the first fiber assembly of first fiber layer 10 can be used, and details thereof are as described above for the hydrophilic fibers (first hydrophilic fibers). The second hydrophilic fiber and the first hydrophilic fiber may be the same kind of fibers, or different kinds of fibers.

However, unlike the first hydrophilic fibers, the average fiber diameter of second hydrophilic fibers is not necessarily preferably less than or equal to 10 $\mu$m, and can be, for example, 0.1 to 20 $\mu$m. The average fiber diameter is preferably 0.5 to 15 $\mu$m for further improving water retainability, tensile strength, cushioning property and so on.

The third fiber assembly forming third fiber layer 30 may include fibers other than hydrophilic fibers (e.g., hydrophobic fibers), but the content of hydrophilic fibers is preferably high from the viewpoint of water absorbency. Specifically, the content of hydrophilic fibers included in the third fiber assembly is preferably greater than or equal to 70% by mass, more preferably greater than or equal to 80% by mass, still more preferably greater than or equal to 90% by mass (e.g., 100% by mass). Examples of the fiber other than hydrophilic fibers may include fibers made from a polyolefin-based resin such as polyethylene or polypropylene, a polyester-based resin or a polyurethane-based resin.

Fibers forming the third fiber assembly may contain one or more additives as necessary. Specific examples of the additive include colorants, heat stabilizers, ultraviolet absorbers, light stabilizers, antioxidants, fine particles, crystallization rate retarders, antistatic agents, flame retardants, plasticizers and lubricants. The additive may be carried on the surfaces of fibers, or contained in fibers.

The third fiber assembly forming third fiber layer 30 is preferably a nonwoven fiber assembly, more preferably a spunlace nonwoven fiber assembly. By a spunlace method, it is possible to easily form third fiber layer 30 that is flexible, and accordingly capable of imparting excellent cushioning property, water retainability and tensile strength to water absorbent laminate 300.

The porosity of third fiber layer 30 in water absorbent laminate 300 is preferably greater than or equal to 80%, more preferably greater than or equal to 85%, still more preferably greater than or equal to 90% from the viewpoint of cushioning property, water retainability and so on. The porosity of third fiber layer 30 is usually less than or equal to 99%, more typically less than or equal to 97%.

The basis weight of third fiber layer 30 is, for example, 10 to 200 g/m$^2$, preferably 20 to 150 g/m$^2$, more preferably 30 to 100 g/m$^2$. It is advantageous in terms of water retainability and permeability of absorbed water into second fiber layer 21 that the basis weight of third fiber layer 30 is in the range as described above.

The apparent density of third fiber layer 30 in water absorbent laminate 300 is set in such a manner that the apparent density of the water absorbent laminate as a whole is preferably less than or equal to 0.3 g/cm$^3$, more preferably less than or equal to 0.25 g/cm$^3$, still more preferably less than or equal to 0.2 g/cm$^3$ (e.g., less than or equal to 0.15 g/cm$^3$). When the apparent density of third fiber layer 30 is excessively large, permeability of absorbed water into second fiber layer 21 is easily reduced, and the effect of improving cushioning property is hardly exhibited. The apparent density of third fiber layer 30 is usually greater than or equal to 0.01 g/cm$^3$, more typically greater than or equal to 0.1 g/cm$^3$.

The thickness of third fiber layer 30 in water absorbent laminate 300 is, for example, 50 to 2000 $\mu$m, preferably greater than or equal to 100 $\mu$m, more preferably greater than or equal to 200 $\mu$m. When the thickness of third fiber layer 30 is excessively small, the effect of improving water retainability, cushioning property and tensile strength is hardly exhibited. The thickness of third fiber layer 30 is preferably less than or equal to 1500 $\mu$m, more preferably less than or equal to 1000 $\mu$m from the viewpoint of permeability of absorbed water into second fiber layer 21.

Preferably, third fiber layer 30 (third fiber assembly) can be produced by a spunlace method in which fibers forming the third fiber assembly are formed into a web, and interlaced by water flow interlacement. As a method for forming a web, a common method, for example, a direct method such as a spunbond method or a melt-blow method; a card method using melt-blown fibers, staple fibers or the like; or a dry method such as an air-lay method can be used. Among these methods, a card method using melt-blown fibers or staple fibers, particularly a card method using staple fibers is commonly used. Examples of the web obtained using staple fibers include random webs, semi-random webs, parallel webs and cross-lap webs.

The obtained fiber web is then subjected to a water flow interlacement treatment to interlace constituent fibers, whereby the third fiber assembly can be obtained. In the water flow interlacement treatment, for example, water flows injected in a columnar shape at a high pressure from a nozzle plate, in which injection holes with a diameter of 0.05 to 0.20 mm and an interval of about 0.30 to 1.50 mm are arranged in one or two lines, are made to collide against a fiber web placed on a porous support member, so that fibers forming the fiber web are three-dimensionally interlaced to be united. In this treatment, a method is preferable in which the fiber web is placed on a moving porous support member, and treated one or more times, for example, with water flows with a water pressure of 1 to 15 MPa, preferably 2 to 12 MPa, more preferably about 3 to 10 MPa. Preferably, the injection holes are arranged in the form of lines in a direction orthogonal to the traveling direction of the fiber web, and the nozzle plate in which the injection holes are arranged is vibrated at the same intervals as injection hole intervals in a direction forming a right angle with respect to the traveling direction of the fiber web placed on the porous support member, so that water flows uniformly collide against the fiber web. The porous support member on which the fiber web is placed is not particularly limited as long as water flows can pass through the fiber web, and examples of the porous support member include mesh screens such as wire nets, and perforated plates. The distance between the injection hole and the fiber web can be selected according to the water pressure, and is, for example, about 1 to 10 cm.

Water absorbent laminate 300 according to this embodiment has the same water absorption rate (water absorption rate at the outer surface of first fiber layer 10) as that of water absorbent laminate 100 according to the first embodiment. The apparent density, water retention rate and longitudinal tensile strength in wetting, of water absorbent laminate 300, can be each in the same range as that described for water absorbent laminate 100. However, the basis weight and the thickness of water absorbent laminate 300 may be larger than the basis weight and the thickness of water absorbent laminate 100 because water absorbent laminate 300 includes third fiber layer 30.

The basis weight of water absorbent laminate 300 is, for example, 30 to 1 500 g/m$^2$, preferably 50 to 1000 g/m$^2$, more preferably 100 to 600 g/m$^2$ (e.g., 200 to 304 g/m$^2$). It is advantageous in terms of water retainability, permeability of absorbed water into second fiber layer 21, necking resistance, cushioning property and so on that the basis weight of water absorbent laminate 300 is in the range as described above. The thickness of water absorbent laminate 300 is usually 100 to 4000 $\mu$m, preferably 500 to 2500 $\mu$m.

Water absorbent laminate 300 can be used in the same applications as those of water absorbent laminate 100 according to the first embodiment.

The apparent density of the water absorbent laminate as a whole is preferably set to be less than or equal to 0.6 g/cm$^3$, more preferably less than or equal to 0.5 g/cm$^3$, still more preferably less than or equal to 0.4 g/cm$^3$, particularly preferably less than or equal to 0.35 g/cm$^3$ (e.g., less than or equal to 0.3 g/cm$^3$). When the apparent density of the water absorbent laminate as a whole is excessively large, the water retention rate and water retention amount are reduced. The apparent density of the water absorbent laminate as a whole is usually greater than or equal to 0.01 g/cm$^3$, more typically greater than or equal to 0.1 g/cm$^3$.

A method for producing water absorbent laminate 300 will now be described. As with water absorbent laminate 100 according to the first embodiment, first fiber layer 10 (first fiber assembly), third fiber layer 30 (third fiber assembly) and second fiber layer 21 (second fiber assembly) are joined together (united) preferably by interlacement of fibers, fusion of fibers or the like. Examples of the interlacement method may include a spunlace method and a needle punching method, and examples of the fusion method may include a steam-jet method. The steam-jet method is a method that can be used in the case where at least one of the fiber layers to be joined together include wet-heat-adhesive fibers. Since second fiber layer 21 includes wet-heat-adhesive fibers, the steam-jet method can be applied to joining of at least second fiber layer 21 with third fiber layer 30. In the case where hydrophilic fibers forming at least one of the first fiber assembly and the third fiber assembly are wet-heat-adhesive fibers such as, for example, an ethylene-vinyl alcohol-based copolymer, the steam-jet method can also be applied to joining of first fiber layer 10 with third fiber layer 30.

According to the method for joining the layers together by interlacement of fibers or fusion of fibers, high continuity among the gaps of first fiber layer 10, the gaps of second fiber layer 21 and the gaps of third fiber layer 30 can be maintained, and therefore high water retainability and high water absorbency can be achieved

Specifically, water absorbent laminate 300 can be produced by a method including, in the following order:

(1) a first step of joining first fiber layer 10 with third fiber layer 30 by interlacement or fusion of fibers forming a first fiber assembly and fibers forming a third fiber assembly; and
(2) a second step of joining second fiber layer 21 with third fiber layer 30 by interlacement or fusion of fibers forming a second fiber assembly and fibers forming the third fiber assembly.

Alternatively, water absorbent laminate 300 can be produced by a method including, in the following order:

(A) a first step of joining second fiber layer 21 with third fiber layer 30 by interlacement or fusion of fibers forming a second fiber assembly and fibers forming a third fiber assembly; and

(B) a second step of joining first fiber layer 10 with third fiber layer 30 by interlacement or fusion of fibers forming a first fiber assembly and fibers forming the third fiber assembly.

<Other Embodiments>

The water absorbent laminates according to the first to third embodiments can be subjected to various kinds of modifications within the bounds of not hindering the effect of the present invention. For example, the third fiber layer used in the third embodiment may be stacked on one side in the thickness direction of the second fiber layer (on a side opposite to the first fiber layer in the second fiber layer) in the first or second embodiment In this case, the water absorbent laminate has a layer structure of first fiber layer/second fiber layer/third fiber layer. In such an embodiment, first fiber layer 10 (first fiber assembly), second fiber layer 21 (second fiber assembly) and third fiber layer 30 (third fiber assembly) are joined together (united) preferably by interlacement of fibers, fusion of fibers or the like By further stacking the third fiber layer, water retainability, cushioning property and necking resistance can be further improved as compared to the water absorbent laminate according to the first or second embodiment.

EXAMPLES

Hereinafter, the present invention will be described further in detail by way of examples, but the present invention is not limited to these examples. Physical property values in the following examples and comparative examples were measured or evaluated in accordance with the methods described below.

[1] Measurement of water absorption rate at surface of first fiber layer on side opposite to second fiber layer

The water absorption rate at a surface of a first fiber layer on a side opposite to a second fiber layer (the other surface of the first fiber layer in the thickness direction) was measured in accordance with the dropping method defined in Section 7.1.1 in "Water Absorbency Test Method for Fiber Products" in JIS L 1907. Specifically, one water droplet of 0.05 g/droplet was dropped using a burette from a height of 10 mm to the first fiber layer of the obtained water absorbent laminate, and the time (seconds) until elimination of mirror reflection by absorption of the water droplet was measured.

[2] Measurement of average fiber diameter of fibers forming first fiber layer

A specimen (5 cm (long) $\times$ 5 cm (wide)) was sampled from the obtained water absorbent laminate, and a photograph of a central part on a surface of the specimen (a part with a diagonal intersection as the center) was taken at a magnification of 1000 using a scanning electron microscope (SEM). With the central part (diagonal intersection) in the obtained photograph as the center, a circle having a radius of 30 cm was drawn on the photograph, 100 fibers were randomly selected from fibers within the circle, the fiber diameter at the central part in the length direction or a part near the central part was measured by a caliper for each of the selected fibers, and the average thereof was calculated, and defined as an average fiber diameter (number average fiber diameter ($\mu$m)). The fibers were selected irrespective of whether the fibers within the circle appearing in the photograph were fibers situated at the outermost surface of the specimen, or fibers situated in the specimen.

[3] Measurement of average pore size of first fiber layer

Measurement was performed by a mercury intrusion method using a pore size distribution apparatus ("AutoPore III9420" manufactured by Shimadzu Corporation).

[4] Basis weight, thickness and apparent density of fiber layer or water absorbent laminate

The basis weight and the thickness were measured in accordance with the methods described in Sections 6.1 and 6.2 in "General Nonwoven Fabric Test Method" in JIS L 1913, and the apparent density was determined by dividing the basis weight by the thickness. The basis weight, the thickness and the apparent density of each of the fiber layers (first to third fiber layers) forming the water absorbent laminate as shown in the tables below are values before the layers are joined together to form the water absorbent laminate.

[5] Water retention rate and water retention amount of water absorbent laminate

The water retention rate was measured in accordance with the method described in Section 6.9.2 in "General Nonwoven Fabric Test Method" in JIS L 1913. Specifically, three specimens each having a size of 100 mm × 100 mm square were sampled, and the mass of each of the specimens (mass before immersion) was measured. The specimens were then immersed in water for 15 minutes, then drawn out, and suspended in air for 1 minute with one corner facing upward, so that the surface was drained, and the mass of the specimens (mass after immersion) was measured. For the three specimens, the water retention rate was calculated in accordance with the following equation:

$$\text{water retention rate (\% by mass)} = 100 \times (\text{mass after immersion - mass before}$$
$$\text{immersion})/\text{mass before immersion,}$$

and the average thereof was defined as the water retention rate of the water absorbent laminate. The mass determined by subtracting the mass before immersion from the mass after immersion was defined as the water retention amount (g).

[6] Necking resistance of water absorbent laminate (longitudinal tensile strength in wetting)

Using a constant-speed extension-type tension tester ("AG-IS" manufactured by Shimadzu Corporation), the longitudinal (MD) tensile strength (N/5cm) in wetting was measured in accordance with the method described in Section 6.3.2 in "General Nonwoven Fabric Test Method" in JIS L 1913. The temperature of water in which the specimen was immersed was 20°C.

<Example 1>

(1) Production of first fiber assembly forming first fiber layer

A melt-blown nonwoven fabric sheet (first fiber assembly, average fiber diameter: 3.67 $\mu$m, average pore size: 19.9 $\mu$m, basis weight: 50.2 g/m$^2$, thickness: 0.38 mm, apparent density: 0.13 g/cm$^3$) made of polyamide-based resin (nylon 6) fibers was produced using melt-blow production equipment. Specifically, melt-blow spinning was performed under the condition of a spinning temperature of 280°C, an air temperature of 290°C, an air pressure of 0.4 MPa and a single hole discharge amount of 0.3 g/hole•minute using a nozzle having 1300 holes per 1 m at a pitch of 0.8 mm, with each hole having a diameter of 0.3 mm, and fibers were collected with a rotating net conveyor as a support, thereby obtaining a melt-blown nonwoven fabric sheet.

(2) Production of third fiber assembly forming third fiber layer

A semi-random web made of "SOFISTA" manufactured by KURARAY CO., LTD. (SOFISTA 1; for details, see [c] in the detailed description of abbreviations below) and having a basis weight of about 50 g/m$^2$ was produced. The card web was placed on a punching drum support having an aperture ratio of 25% and a hole diameter of 0.3 mm, and continuously transferred in the long direction at a speed of 5 m/minute, and simultaneously, high-pressure water flows were injected from above to perform an interlacement treatment, thereby producing an interlaced nonwoven fiber assembly (third fiber assembly, basis weight: 52.3 g/m$^2$, thickness: 0.61 mm, apparent density: 0.09 g/cm$^3$). In the interlacement treatment, three nozzles (distance between neighboring nozzles: 20 cm) each having orifices provided at intervals of 0.6 mm along the width direction of the web, with each orifice having a hole diameter of 10 mm were used. The water pressure of high-pressure water flows injected from the nozzle in the first line was 3.0 MPa, the water pressure of high-pressure water flows injected from the nozzle in the second line was 5.0 MPa, and the water pressure of high-pressure water flows injected from the nozzle in the third line was 10.0 MPa.

(3) Joining of first fiber assembly with third fiber assembly

The melt-blown nonwoven fabric sheet (first fiber assembly) produced in (1) was wound off, and superimposed on the third fiber assembly produced in (2), the resultant laminate was placed on a flat support having fine meshes over the entire part, and continuously transferred, and high-pressure water flows were injected to perform an interlacement treatment. By the interlacement treatment, fibers forming two nonwoven fiber assemblies were interlaced, and combined and united to obtain a composite nonwoven fabric. In the interlacement treatment, three nozzles (distance between neighboring nozzles: 20 cm) each having orifices provided at intervals of 0.6 mm along the width direction of the web, with each orifice having a hole diameter of 0.10 mm were used. The water pressure of high-pressure water flows injected from the nozzle in the first line was 3.0 MPa, the water pressure of high-pressure water flows injected from the nozzle in the second line was 5.0 MPa, and the water pressure of high-pressure water flows injected from the nozzle in the third line was 10.0 MPa.

(4) Production of second fiber assembly forming second fiber layer, and production of water absorbent laminate

The composite nonwoven fabric produced in (3) was placed on a semi-random web made of "SOFISTA" manufactured by KURARAY CO., LTD. (SOFISTA 2; for details, see [d] in the detailed description of abbreviations below) and having a basis weight of about 100 g/m$^2$, so that a laminated sheet was produced. The laminated sheet was transferred between an upper belt conveyor and a lower belt conveyor which were each equipped with a 500 mm-wide stainless endless net of 50 mesh and which rotated at the same speed in the same direction. The laminated sheet was introduced into a steam injection apparatus provided in the upper belt conveyor, and high-temperature steam with a pressure of 0.2 MPa was injected from the apparatus to perform a steam treatment, thereby obtaining a water absorbent laminate. The injection direction of the high-temperature steam was parallel to the thickness direction of the laminated sheet. The steam injection apparatus included steam injection nozzles each having a hole diameter of 0.3 mm, the nozzles being arranged in one line at a pitch of 1 mm along the width direction of the conveyor. The distance between the upper belt conveyor and the lower belt conveyor was 1.5 mm. The nozzles were disposed on the back side of the conveyor belt in such a manner that the nozzles were almost in contact with the belt.

<Examples 2 to 10 and 12>

Except that the materials of the first to third fiber layers and other configurations were set as shown in Table 1 and Table 2, the same procedure as in Example 1 was carried out to produce a water absorbent laminate having a three-layer structure. In Examples 6 to 10, the third fiber layer is composed of a third fiber assembly including two kinds of fibers, and the mass ratio between the two kinds of fibers is 50/50 in each of these examples.

<Example 11>

(1) Production of first fiber assembly forming first fiber layer

A melt-blown nonwoven fabric sheet (first fiber assembly) made of polyamide-based resin (nylon 6) fibers was produced in the same manner as in (1) in Example 1.

(2) Production of second fiber assembly forming second fiber layer

A semi-random web made of "SOFISTA" (SOFISTA 2) manufactured by KURARAY CO., LTD. and having a basis weight of about 100 g/m$^2$ was produced. The card web was transferred between an upper belt conveyor and a lower belt conveyor which were each equipped with a 500 mm-wide stainless endless net of 50 mesh and which rotated at the same speed in the same direction. The web was introduced into a steam injection apparatus provided in the upper belt conveyor, and high-temperature steam with a pressure of 0.2 MPa was injected from the apparatus to perform a steam treatment, thereby obtaining a second fiber assembly. The injection direction of the high-temperature steam was parallel to the thickness direction of the second fiber assembly. The steam injection apparatus included steam injection nozzles each having a hole diameter of 0.3 mm, the nozzles being arranged in one line at a pitch of 1 mm along the width direction of the conveyor. The distance between the upper belt conveyor and the lower belt conveyor was 1.5 mm. The nozzles were disposed on the back side of the conveyor belt in such a manner that the nozzles were almost in contact with the belt.

(3) Production of Water Absorbent Laminate

The melt-blown nonwoven fabric sheet (first fiber assembly) produced in (1) was wound off, and superimposed on the second fiber assembly produced in (2), the resultant laminate was placed on a flat support having fine meshes over the entire part, and continuously transferred, and high-pressure water flows were injected to perform an interlacement treatment. By the interlacement treatment, fibers forming two nonwoven fiber assemblies were interlaced, and combined and united to obtain a water absorbent laminate. In the interlacement treatment, three nozzles (distance between neighboring nozzles: 20 cm) each having orifices provided at intervals of 0.6 mm along the width direction of the web, with each orifice having a hole diameter of 0.10 mm were used. The water pressure of high-pressure water flows injected from the nozzle in the first line was 3.0 MPa, the water pressure of high-pressure water flows injected from the nozzle in the second line was 5.0 MPa, and the water pressure of high-pressure water flows injected from the nozzle in the third line was 10.0 MPa.

<Example 13> Not representative of the invention

(1) Production of first fiber assembly forming first fiber layer

A semi-random web made of "SOFISTA" (SOFISTA 1) manufactured by KURARAY CO., LTD. and having a basis weight of about 50 g/m$^2$ was produced. The card web was placed on a punching drum support having an aperture ratio of 25% and a hole diameter of 0.3 mm, and continuously transferred in the long direction at a speed of 5 m/minute, and simultaneously, high-pressure water flows were injected from above to perform an interlacement treatment, thereby producing an interlaced nonwoven fiber assembly (first fiber assembly, average fiber diameter: 11.00 $\mu$m, average pore size: 59.0 $\mu$m, basis weight: 52.3 g/m$^2$, thickness: 0.61 mm, apparent density: 0.09 g/cm$^3$). In the interlacement treatment, three nozzles (distance between neighboring nozzles: 20 cm) each having orifices provided at intervals of 0.6 mm along the width direction of the web, with each orifice having a hole diameter of 10 mm were used. The water pressure of high-pressure water flows injected from the nozzle in the first line was 3.0 MPa, the water pressure of high-pressure water flows injected from the nozzle in the second line was 5.0 MPa, and the water pressure of high-pressure water flows injected from the nozzle in the third line was 10.0 MPa.

(2) Production of second fiber assembly forming second fiber layer

A semi-random web made of "SOFISTA" (SOFISTA 2) manufactured by KURARAY CO., LTD. and having a basis weight of about 100 g/m$^2$ was produced. The card web was transferred between an upper belt conveyor and a lower belt conveyor which were each equipped with a 500 mm-wide stainless endless net of 50 mesh and which rotated at the same speed in the same direction. The web was introduced into a steam injection apparatus provided in the upper belt conveyor, and high-temperature steam with a pressure of 0.2 MPa was injected from the apparatus to perform a steam treatment, thereby obtaining a second fiber assembly. The injection direction of the high-temperature steam was parallel to the thickness direction of the second fiber assembly. The steam injection apparatus included steam injection nozzles each having a hole diameter of 0.3 mm, the nozzles being arranged in one line at a pitch of 1 mm along the width direction of the conveyor. The distance between the upper belt conveyor and the lower belt conveyor was 1.5 mm. The nozzles were disposed on the back side of the conveyor belt in such a manner that the nozzles were almost in contact with the belt.

(3) Production of Water Absorbent Laminate

The first fiber assembly produced in (1) was wound off, and superimposed on the second fiber assembly produced in (2), the resultant laminate was placed on a flat support having fine meshes over the entire part, and continuously transferred, and high-pressure water flows were injected to perform an interlacement treatment. By the interlacement treatment, fibers forming two nonwoven fiber assemblies were interlaced, and combined and united to obtain a water absorbent laminate. In the interlacement treatment, three nozzles (distance between neighboring nozzles: 20 cm) each having orifices provided at intervals of 0.6 mm along the width direction of the web, with each orifice having a hole diameter of 0.10 mm were used. The water pressure of high-pressure water flows injected from the nozzle in the first line was 3.0 MPa, the water pressure of high-pressure water flows injected from the nozzle in the second line was 5.0 MPa, and the water pressure of high-pressure water flows injected from the nozzle in the third line was 10.0 MPa.

<Example 14>

(1) Production of first fiber assembly forming first fiber layer

A melt-blown nonwoven fabric sheet (first fiber assembly) made of polyamide-based resin (nylon 6) fibers was produced in the same manner as in (1) in Example 1.

(2) Production of third fiber assembly forming third fiber layer

A third fiber assembly as a water flow-interlaced nonwoven fiber assembly made of SOFISTA 1 was produced in the same manner as in (2) in Example 1.

(3) Joining of first fiber assembly with third fiber assembly

A composite nonwoven fabric formed by combining and uniting a first fiber assembly and a third fiber assembly was obtained in the same manner as in (3) in Example 1.

(4) Production of second fiber assembly forming second fiber layer, and production of water absorbent laminate

In the same manner as in (4) in the example except that the distance between the upper belt conveyor and the lower belt conveyor was 1.0 mm, a second fiber assembly was joined to a composite nonwoven fabric to produce a water absorbent laminate.

<Example 15>

In the same manner as in (4) in the example except that the distance between the upper belt conveyor and the lower belt conveyor was 2.5 mm, a water absorbent laminate was produced.

<Comparative Examples 1 to 3>

Except that the materials of the first to third fiber layers and other configurations were set as shown in Table 3, the same procedure as in Example 1 was carried out to produce a water absorbent laminate having a three-layer structure.

<Comparative Examples 4 to 7>

The nonwoven fabric of Comparative Example 4 is the melt-blown nonwoven fabric sheet used in the first fiber layer forming the water absorbent laminate described in Example 1. The nonwoven fabric of Comparative Example 5 is the spunlace nonwoven fabric used in the third fiber layer forming the water absorbent laminate described in Example 1. The nonwoven fabric of Comparative Example 6 is the steam-jet nonwoven fabric used in the second fiber layer forming the water absorbent laminate described in Example 1. The nonwoven fabric of Comparative Example 7 is a spunlace nonwoven fabric made of layered lamination cross-section split fibers made from nylon 6 and polyethylene terephthalate (for details, see [k] in the detailed description of abbreviations below).

[Table 1]

| | | Example 1 | Example 2 | Example 3 | Example 4 | Example 5 | Example 6 | Example 7 | Example 8 |
|---|---|---|---|---|---|---|---|---|---|
| First fiber layer | Material | Ny | Ny | Ny | Ny | EVOH | Ny | Ny | Ny |
| | Production method | MB | MB | MB | MB | MB | MB | MB | MB |
| | Average fiber diameter ($\mu$m) | 3.67 | 3.67 | 3.67 | 3.67 | 6.00 | 3.67 | 3.67 | 3.67 |
| | Average pore size ($\mu$m) | 19.9 | 19.9 | 19.9 | 19.9 | 23.0 | 19.0 | 18.8 | 18.8 |
| | Basis weight (g/m$^2$) | 50.2 | 50.2 | 50.2 | 50.2 | 49.8 | 50.2 | 50.2 | 50.2 |
| | Thickness (mm) | 0.38 | 0.38 | 0.38 | 0.38 | 0.45 | 0.38 | 0.38 | 0.38 |
| | Apparent density (g/cm$^3$) | 0.13 | 0.13 | 0.13 | 0.13 | 0.11 | 0.13 | 0.13 | 0.13 |
| Third fiber layer | Material | SOFISTA 1 | SOFISTA 2 | SOFISTA 3 | SOFISTA 4 | SOFISTA 1 | SOFISTA 1/ SOFISTA 2 | Rayon/ SOFISTA 2 | PET/ SOFISTA 2 |
| | Production method | SL | SL | SL | SL | SL | SL | SL | SL |
| | Basis weight (g/m$^2$) | 52.3 | 51.0 | 50.8 | 50.1 | 52.3 | 49.5 | 48.7 | 51.3 |
| | Thickness (mm) | 0.61 | 0.58 | 0.59 | 0.58 | 0.61 | 0.62 | 0.55 | 0.60 |
| | Apparent density (g/cm$^3$) | 0.09 | 0.09 | 0.09 | 0.09 | 0.09 | 0.08 | 0.09 | 0.09 |
| Second fiber layer | Material | SOFISTA 2 | SOFISTA 2 | SOFISTA 2 | SOFISTA 2 | SOFISTA 2 | SOFISTA 2 | SOFISTA 2 | SOFISTA 2 |
| | Production method | SJ | SJ | SJ | SJ | SJ | SJ | SJ | SJ |
| | Basis weight (g/m$^2$) | 102.9 | 102.9 | 102.9 | 102.9 | 102.9 | 102.9 | 102.9 | 102.9 |
| | Thickness (mm) | 0.60 | 0.60 | 0.60 | 0.60 | 0.60 | 0.60 | 0.60 | 0.60 |
| | Apparent density (g/cm$^3$) | 0.17 | 0.17 | 0.17 | 0.17 | 0.17 | 0.17 | 0.17 | 0.17 |

(continued)

| | | Example 1 | Example 2 | Example 3 | Example 4 | Example 5 | Example 6 | Example 7 | Example 8 |
|---|---|---|---|---|---|---|---|---|---|
| Water absorbent laminate | Water absorption rate (seconds) | 2.26 | 3.05 | 3.51 | 5.53 1.45 | | 2.40 | 1.70 | 2.81 |
| | Water retention rate (%) | 411 | 336 | 326 | 440 | 463 | 398 | 422 | 317 |
| | Water retention amount (g) | 8.72 | 7.13 | 6.75 | 10.43 | 9.74 | 8.40 | 8.79 | 6.56 |
| | Tensile strength (N/5cm) | 184.0 | 280.3 | 248.3 | 161.7 | 180.1 | 230.2 | 241.1 | 227.3 |
| | Basis weight (g/m²) | 212.2 | 212.3 | 207.2 | 237.0 | 210.3 | 211.1 | 208.3 | 207.0 |
| | Thickness (mm) | 1.09 | 0.94 | 0.90 | 1.13 | 1.10 | 1.01 | 0.99 | 1.07 |
| | Apparent density (g/cm³) | 0.19 | 0.23 | 0.23 | 0.21 | 0.19 | 0.21 | 0.21 | 0.19 |

[Table 2]

| | | Example 9 | Example 10 | Example 11 | Example 12 | Example 13 | Example 14 | Example 15 |
|---|---|---|---|---|---|---|---|---|
| First fiber layer | Material | Ny | Ny | Ny | Ny | SOFISTA 1 | Ny | Ny |
| | Production method | MB | MB | MB | MB | SL | MB | MB |
| | Average fiber diameter ($\mu$m) | 3.67 | 3.67 | 3.67 | 3.67 | 11.00 | 3.67 | 3.67 |
| | Average pore size ($\mu$m) | 19.9 | 19.9 | 19.9 | 19.9 | 59.0 | 19.9 | 19.9 |
| | Basis weight (g/m$^2$) | 50.2 | 50.2 | 50.2 | 50.2 | 52.3 | 50.2 | 50.2 |
| | Thickness (mm) | 0.38 | 0.38 | 0.38 | 0.38 | 0.61 | 0.38 | 0.38 |
| | Apparent density (g/cm$^3$) | 0.13 | 0.13 | 0.13 | 0.13 | 0.09 | 0.13 | 0.13 |
| Third fiber layer | Material | Rayon/ SOFISTA 1 | PET/ SOFISTA 1 | - | Rayon | - | SOFISTA 1 | SOFISTA 1 |
| | Production method | SL | SL | - | SL | - | SL | SL |
| | Basis weight (g/m$^2$) | 50.3 | 49.5 | - | 48.3 | - | 52.3 | 52.3 |
| | Thickness (mm) | 0.50 | 0.63 | - | 0.42 | - | 0.61 | 0.61 |
| | Apparent density (g/cm$^3$) | 0.11 | 0.08 | - | 0.12 | - | 0.09 | 0.09 |
| Second fiber layer | Material | SOFISTA 2 | SOFISTA 2 | SOFISTA 2 | SOFISTA 2 | SOFISTA 2 | SOFISTA 2 | SOFISTA 2 |
| | Production method | SJ | SJ | SJ | SJ | SJ | SJ | SJ |
| | Basis weight (g/m$^2$) | 102.9 | 102.9 | 102.9 | 102.9 | 102.9 | 102.9 | 102.9 |
| | Thickness (mm) | 0.60 | 0.60 | 0.60 | 0.60 | 0.60 | 0.60 | 0.60 |
| | Apparent density (g/cm$^3$) | 0.17 | 0.17 | 0.17 | 0.17 | 0.17 | 0.17 | 0.17 |
| Water absorbent laminate | Water absorption rate (seconds) | 1.2 1 | 2.54 | 3.10 | 1.31 | 0.62 | 2.20 | 2.24 |
| | Water retention rate (%) | 468 | 403 | 301 | 480 | 273 | 258 | 450 |
| | Water retention amount (g) | 9.69 | 8.46 | 4.52 | 9.23 | 4.06 | 5.72 | 9.23 |
| | Tensile strength (N/5cm) | 201.1 | 181.5 | 180.1 | 201.1 | 178.5 | 230.1 | 175.3 |
| | Basis weight (g/m$^2$) | 207.1 | 210.0 | 150.1 | 192.2 | 148.8 | 221.7 | 205.1 |
| | Thickness (mm) | 1.05 | 1.08 | 0.85 | 0.92 | 0.76 | 0.60 | 2.19 |
| | Apparent density (g/cm$^3$) | 0.20 | 0.19 | 0.18 | 0.21 | 0.20 | 0.37 | 0.09 |

EP 3 159 444 B1

[Table 3]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| First fiber layer | Material | PP | PBT | Ny | Ny | SOFISTA 1 | SOFISTA 2 | Split fibers |
| | Production method | MB | MB | MB | MB | SL | SJ | SL |
| | Average fiber diameter ($\mu$m) | 2.81 | 5.11 | 3.67 | 3.67 | 11.00 | 11.00 | 4.20 |
| | Average pore size ($\mu$m) | 16.3 | 19.9 | 19.9 | 19.9 | 59.0 | 65.2 | 26.2 |
| | Basis weight (g/m$^2$) | 51.1 | 50.3 | 50.2 | 50.2 | 52.3 | 102.9 | 48.5 |
| | Thickness (mm) | 0.34 | 0.35 | 0.38 | 0.38 | 0.61 | 0.60 | 0.34 |
| | Apparent density (g/cm$^3$) | 0.15 | 0.14 | 0.13 | 0.13 | 0.09 | 0.17 | 0.14 |
| Third fiber layer | Material | SOFISTA 1 | SOFISTA 1 | PET | - - | - - | | - |
| | Production method | SL | SL | SL | | | - | - |
| | Basis weight (g/m$^2$) | 52.3 | 52.3 | 50.1 | - | - | - | - |
| | Thickness (mm) | 0.61 | 0.61 | 0.62 | - | - | - | - |
| | Apparent density (g/cm$^3$) | 0.09 | 0.09 | 0.09 | - | - | - | - |
| Second fiber layer | Material | SOFISTA 2 | SOFISTA 2 | SOFISTA 2 | - | - | | - |
| | Production method | SJ | SJ | SJ | - | - | - | - |
| | Basis weight (g/m$^2$) | 102.9 | 102.9 | 102.9 | - | - | - | - |
| | Thickness (mm) | 0.60 | 0.60 | 0.60 | - | - | - | - |
| | Apparent density (g/m$^3$) | 0.17 | 0.17 | 0.17 | - | - | - | - |

EP 3 159 444 B1

(continued)

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Water absorbent laminate | Water absorption rate (seconds) | 20.30 | 32.10 | 13.80 | 2.30 | 0.62 | 0.40 | 1.25 |
| | Water retention rate (%) | 298 | 280 | 313 | 573 | 1001 | 89 | 637 |
| | Water retention amount (g) | 5.99 | 5.57 | 6.36 | 2.96 | 5.84 | 0.92 | 3.09 |
| | Tensile strength (N/5cm) | 180.1 | 173.9 | 195.5 | 50.1 | 152.2 | 213.4 | 49.0 |
| | Basis weight (g/m$^2$) | 201.1 | 198.8 | 203.3 | 51.7 | 58.3 | 102.9 | 48.5 |
| | Thickness (mm) | 1.03 | 1.02 | 1.00 | 0.29 | 0.70 | 0.60 | 0.34 |
| | Apparent density (g/cm$^3$) | 0.20 | 0.19 | 0.20 | 0.18 | 0.08 | 0.17 | 0.14 |

Details of abbreviations shown in Tables 1 to 3 are as follows.

[a] Ny: nylon 6 that is a polyamide-based resin

[b] EVOH: ethylene-vinyl alcohol copolymer [ethylene content: 44 mol%, saponification degree: 98.4%]

[c] SOFISTA 1: high-melting-point-type core-sheath-type composite staple fibers including polyethylene terephthalate as a core part and an ethylene-vinyl alcohol copolymer (ethylene content: 44 mol%, saponification degree: 98.4%) as a sheath part ["SOFISTA" manufactured by KURARAY CO., LTD, average fineness: 1.7 dtex, average fiber diameter: 11 $\mu$m, average fiber length: 51 mm, core-sheath mass ratio: 50/50, circular cross-section, core part diameter: 8.9 $\mu$m]

[d] SOFISTA 2: low-melting-point-type core-sheath-type composite staple fibers including polyethylene terephthalate as a core part and an ethylene-vinyl alcohol copolymer (ethylene content: 44 mol%, saponification degree: 98.4%) as a sheath part ["SOFISTA" manufactured by KURARAY CO., LTD, average fineness: 1.7 dtex, average fiber diameter: 11 $\mu$m, average fiber length: 51 mm, core-sheath mass ratio: 50/50, circular cross-section, core part diameter: 8.9 $\mu$m]

[e] SOFISTA 3: low-melting-point-type core-sheath-type composite staple fibers including polyethylene terephthalate as a core part and an ethylene-vinyl alcohol copolymer (ethylene content: 44 mol%, saponification degree: 98.4%) as a sheath part ["SOFISTA" manufactured by KURARAY CO., LTD, average fineness: 3.3 dtex, average fiber length: 51 mm, core-sheath mass ratio: 50/50, circular cross-section, core part diameter: 12.5 $\mu$m]

[f] SOFISTA 4: low-melting-point-type core-sheath-type composite staple fibers including polypropylene as a core part and an ethylene-vinyl alcohol copolymer (ethylene content: 44 mol%, saponification degree: 98.4%) as a sheath part ["SOFISTA" manufactured by KURARAY CO., LTD, average fineness: 1.7 dtex, average fiber length: 51 mm, core-sheath mass ratio: 50/50, circular cross-section, core part diameter: 8.9 $\mu$m]

[g] Rayon: rayon fibers ["HOPE" manufactured by Omikenshi Co., Ltd., average fiber diameter: 12 $\mu$m, average fiber length: 40 mm]

[h] PET: polyethylene terephthalate fibers [manufactured by Toray Industries, Inc., average fiber diameter: 12 $\mu$m, average fiber length: 51 mm]

[i] PP: polypropylene resin [MFR (230°C, 2.16 kg) = 1100 g/10 minutes]

[j] PBT: polybutylene terephthalate resin [MFR (235°C, 2.16 kg) = 90 g/10 minutes]

[k] Split fibers: layered lamination cross-section split fibers made from nylon 6 and polyethylene terephthalate ["WRAMP" manufactured by KURARAY CO., LTD, 3.8 dtex, average fiber diameter: 23.0 $\mu$m, average fiber length: 51 mm, mass ratio of nylon 6 to polyethylene terephthalate: 33/67]

[l] MB: melt-blow method

[m] SL: spunlace method

[n] SJ: steam-jet method

REFERENCE SIGNS LIST

10 First fiber layer, 21, 22 Second fiber layer, 30 Third fiber layer, 100, 200, 300 Water absorbent laminate

**Claims**

1. A water absorbent laminate comprising:

a first fiber layer including a first fiber assembly including first hydrophilic fibers; and
a second fiber layer including a second fiber assembly including wet-heat-adhesive fibers in an amount greater than or equal to 80% by mass, wherein
a surface of the first fiber layer on a side opposite to the second fiber layer has a water absorption rate less than or equal to 10 seconds as determined in accordance with the dropping method defined in JIS L 1907, wherein said first fiber assembly is a nonwoven fiber assembly of said first hydrophilic fibers having an average fiber diameter less than or equal to 10 $\mu$m, wherein the measurement of the average fiber diameter of fibers forming first fiber layer is as follows:
a specimen which is 5 cm (long) $\times$ 5 cm (wide) is sampled from the obtained water absorbent laminate; a photograph of a central part on a surface of the specimen which is a part with a diagonal intersection as the center is taken at a magnification of 1000 using a scanning electron microscope; with the central part which is a diagonal intersection in the obtained photograph as the center, a circle having a radius of 30 cm is drawn on the photograph; 100 fibers are randomly selected from fibers within the circle; the fiber diameter at the central part in the length direction or a part near the central part is measured by a caliper for each of the selected fibers;

and the average thereof is calculated.

2. The water absorbent laminate according to claim 1, wherein said first fiber layer has an average pore size of 0.5 to 50 μm, wherein the measurement of the average pore size is performed by a mercury intrusion method using a pore size distribution apparatus.

3. The water absorbent laminate according to claim 1 or 2, wherein said first fiber assembly is a melt-blown nonwoven fiber assembly.

4. The water absorbent laminate according to any one of claims 1 to 3, wherein said first hydrophilic fibers include a polyamide-based resin.

5. The water absorbent laminate according to any one of claims 1 to 4, further comprising a third fiber layer including a third fiber assembly including second hydrophilic fibers, the third fiber layer being interposed between said first fiber layer and said second fiber layer.

6. The water absorbent laminate according to any one of claims 1 to 5, having a tensile strength in a longitudinal direction in a wetted state greater than or equal to 160 N/5 cm as determined in accordance with JIS L 1913.

7. Use of the water absorbent laminate according to any one of claims 1 to 6 for removing abrasive grains and water from a surface of an object.

8. A method for producing the water absorbent laminate according to claim 5, the method comprising:

a first step of joining said first fiber layer with said third fiber layer by interlacement or fusion of fibers forming said first fiber assembly and fibers forming said third fiber assembly, or joining said second fiber layer with said third fiber layer by interlacement or fusion of fibers forming said second fiber assembly and fibers forming said third fiber assembly; and
a second step of joining said second fiber layer with said third fiber layer by interlacement or fusion of fibers forming said second fiber assembly and fibers forming said third fiber assembly when said first fiber layer and said third fiber layer are joined together in said first step, and joining said first fiber layer with said third fiber layer by interlacement or fusion of fibers forming said first fiber assembly and fibers forming said third fiber assembly when said second fiber layer and said third fiber layer are joined together in said first step,
the interlacement or fusion in both said first step and said second step being performed by a spunlace method, a steam-jet method or a needle punching method.


**Patentansprüche**

1. Ein wasserabsorbierendes Laminat, umfassend:

eine erste Faserschicht, die eine erste Faseranordnung enthält, die erste hydrophile Fasern enthält; und
eine zweite Faserschicht, die eine zweite Faseranordnung enthält, die Nass-Wärme-Klebefasern in einer Menge von mehr als oder gleich 80 Massen-% enthält, wobei eine Oberfläche der ersten Faserschicht auf einer Seite, die der zweiten Faserschicht gegenüber liegt, eine Wasserabsorptionsrate von weniger als oder gleich 10 Sekunden aufweist, bestimmt gemäß der in JIS L 1907 definierten Dropping-Methode, wobei die erste Faseranordnung eine Vliesfaseranordnung aus den ersten hydrophilen Fasern mit einem durchschnittlichen Faserdurchmesser von weniger als oder gleich 10 μm ist, wobei die Messung des durchschnittlichen Faserdurchmessers der Fasern, die die erste Faserschicht bilden, wie folgt ist:
eine Probe von 5 cm (lang) × 5 cm (breit) wird aus dem erhaltenen wasserabsorbierenden Laminat entnommen; eine Fotografie eines zentralen Teils auf einer Oberfläche der Probe, bei der es sich um einen Teil mit einem diagonalen Schnittpunkt als Mittelpunkt handelt, wird bei einer 1000-fachen Vergrößerung unter Verwendung eines Rasterelektronenmikroskops aufgenommen; mit dem zentralen Teil, der ein diagonaler Schnittpunkt in der erhaltenen Fotografie ist, als Zentrum, wird ein Kreis mit einem Radius von 30 cm auf die Fotografie gezeichnet; 100 Fasern werden zufällig aus den Fasern innerhalb des Kreises ausgewählt; der Faserdurchmesser im zentralen Teil in der Längsrichtung oder in einem Teil nahe dem zentralen Teil wird mit einer Schieblehre für jede der ausgewählten Fasern gemessen; und der Durchschnitt davon wird berechnet.

**2.** Das wasserabsorbierende Laminat nach Anspruch 1, wobei die erste Faserschicht eine durchschnittliche Porengröße von 0,5 bis 50 μm aufweist, wobei die Messung der durchschnittlichen Porengröße durch ein Quecksilbereindringverfahren unter Verwendung einer Porengrößenverteilungsvorrichtung durchgeführt wird.

**3.** Das wasserabsorbierende Laminat nach Anspruch 1 oder 2, wobei die erste Faseranordnung eine schmelzgeblasene Faservliesanordnung ist.

**4.** Das wasserabsorbierende Laminat nach einem der Ansprüche 1 bis 3, wobei die ersten hydrophilen Fasern ein Harz auf Polyamid-Basis enthält.

**5.** Das wasserabsorbierende Laminat nach einem der Ansprüche 1 bis 4, ferner umfassend eine dritte Faserschicht, die eine dritte Faseranordnung enthält, die zweite hydrophile Fasern enthält, wobei die dritte Faserschicht zwischen der ersten Faserschicht und der zweiten Faserschicht angeordnet ist.

**6.** Das wasserabsorbierende Laminat nach einem der Ansprüche 1 bis 5, das eine Zugfestigkeit in Längsrichtung im benetzten Zustand von größer oder gleich 160 N/5 cm aufweist, bestimmt gemäß JIS L 1913.

**7.** Verwendung des wasserabsorbierenden Laminats nach einem der Ansprüche 1 bis 6 zum Entfernen von Schleifkörnern und Wasser von der Oberfläche eines Objekts.

**8.** Ein Verfahren zur Herstellung des wasserabsorbierenden Laminats nach Anspruch 5, wobei das Verfahren umfasst:

einen ersten Schritt des Verbindens der ersten Faserschicht mit der dritten Faserschicht durch Verflechtung oder Verschmelzung von Fasern, die die erste Faseranordnung bilden, und Fasern, die die dritte Faseranordnung bilden, oder des Verbindens der zweiten Faserschicht mit der dritten Faserschicht durch Verflechtung oder Verschmelzung von Fasern, die die zweite Faseranordnung bilden, und Fasern, die die dritte Faseranordnung bilden; und
einen zweiten Schritt des Verbindens der zweiten Faserschicht mit der dritten Faserschicht durch Verflechtung oder Verschmelzung von Fasern, die die zweite Faseranordnung bilden, und Fasern, die die dritte Faseranordnung bilden, wenn die erste Faserschicht und die dritte Faserschicht in dem ersten Schritt miteinander verbunden werden, und Verbinden der ersten Faserschicht mit der dritten Faserschicht durch Verflechtung oder Verschmelzung von Fasern, die die erste Faseranordnung bilden, und Fasern, die die dritte Faseranordnung bilden, wenn die zweite Faserschicht und die dritte Faserschicht in dem ersten Schritt miteinander verbunden werden,
wobei die Verflechtung oder Verschmelzung sowohl im ersten Schritt als auch im zweiten Schritt durch ein Spunlace-Verfahren, ein Dampfstrahlverfahren oder ein Vernadelungsverfahren durchgeführt wird.

**Revendications**

**1.** Stratifié absorbant l'eau comprenant :

une première couche de fibre contenant un premier assemblage de fibres contenant des premières fibres hydrophiles ; et
une deuxième couche de fibres contenant un deuxième assemblage de fibres contenant des fibres adhésives à la chaleur humide en une quantité supérieure ou égale à 80 % en masse, dans lequel
une surface de la première couche de fibres sur un côté opposé à la deuxième couche de fibres a une vitesse d'absorption de l'eau inférieure ou égale à 10 secondes, telle que déterminée conformément à la méthode de goutte tombante définie dans la norme JIS L 1907, dans lequel ledit premier assemblage de fibres est un assemblage de fibres non tissées desdites premières fibres hydrophiles ayant un diamètre de fibre moyen inférieur ou égal à 10 μm, dans lequel la mesure du diamètre de fibre moyen des fibres formant la première couche de fibres est comme suit :
un échantillon qui fait 5 cm (longueur) x 5 cm (largeur) est échantillonné à partir du stratifié absorbant l'eau obtenu ; une photographie d'une partie centrale sur une surface de l'échantillon, qui est une partie avec une intersection diagonale en tant que centre, est prise à un grossissement de 1000 au moyen d'un microscope électronique à balayage ; avec la partie centrale qui est une intersection diagonale dans la photographie obtenue en tant que centre, un cercle ayant un rayon de 30 cm est tracé sur la photographie ; 100 fibres sont choisies au hasard parmi les fibres à l'intérieur du cercle ; le diamètre des fibres au niveau de la partie centrale dans la direction de la longueur ou au niveau d'une partie proche de la partie centrale est mesuré au moyen d'un pied à coulisse pour chacune des fibres sélectionnées ; et la moyenne de ces diamètres est calculée.

2.  Stratifié absorbant l'eau selon la revendication 1, dans lequel ladite première couche de fibres a une taille de pore moyenne de 0,5 à 50 μm, dans lequel la mesure de la taille de pore moyenne est effectuée au moyen d'une méthode d'intrusion de mercure utilisant un dispositif de distribution des tailles de pores.

3.  Stratifié absorbant l'eau selon la revendication 1 ou 2, dans lequel ledit premier assemblage de fibres est un assemblage de fibres non tissées soufflées à l'état fondu.

4.  Stratifié absorbant l'eau selon l'une quelconque des revendications 1 à 3, dans lequel lesdites premières fibres hydrophiles comprennent une résine à base de polyamide.

5.  Stratifié absorbant l'eau selon l'une quelconque des revendications 1 à 4, comprenant en outre une troisième couche de fibres contenant un troisième assemblage de fibres contenant des deuxièmes fibres hydrophiles, la troisième couche de fibres étant interposée entre ladite première couche de fibres et ladite deuxième couche de fibres.

6.  Stratifié absorbant l'eau selon l'une quelconque des revendications 1 à 5, ayant une résistance à la traction dans la direction longitudinale à l'état mouillé supérieure ou égale à 160 N/5 cm, telle que déterminée conformément à la norme J1S L 1913.

7.  Utilisation du stratifié absorbant l'eau de l'une quelconque des revendications 1 à 6 pour retirer des grains abrasifs et de l'eau sur la surface d'un objet.

8.  Méthode pour produire le stratifié absorbant l'eau de la revendication 5, la méthode comprenant :

    une première étape de jonction de ladite première couche de fibres avec ladite troisième couche de fibres par entrelacement ou fusion de fibres formant ledit premier assemblage de fibres et de fibres formant ledit troisième assemblage de fibres, ou de jonction de ladite deuxième couche de fibres avec ladite troisième couche de fibres par entrelacement ou fusion de fibres formant ledit deuxième assemblage de fibres et de fibres formant ledit troisième assemblage de fibres ; et
    une deuxième étape de jonction de ladite deuxième couche de fibres avec ladite troisième couche de fibres par entrelacement ou fusion de fibres formant ledit deuxième assemblage de fibres et de fibres formant ledit troisième assemblage de fibres quand ladite première couche de fibres et ladite troisième couche de fibres sont jointes ensemble dans ladite première étape, et de jonction de ladite première couche de fibres avec ladite troisième couche de fibres par entrelacement ou fusion de fibres formant ledit premier assemblage de fibres et de fibres formant ledit troisième assemblage de fibres quand ladite deuxième couche de fibres et ladite troisième couche de fibres sont jointes ensemble dans ladite première étape,
    l'entrelacement ou la fusion tant dans ladite première étape que dans ladite deuxième étape étant effectué par une méthode de lacement par filage, une méthode de jet de vapeur, ou une méthode d'aiguilletage.

FIG.1

100

10

21

FIG.2

200

10

22

FIG.3

300

10

30

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11291377 A
- JP 2004313425 A
- JP 2009233645 A